# EUROPEAN PATENT APPLICATION

(11) **EP 3 960 716 A1**
(43) Date of publication of application: **02.03.2022**
(21) Application number: 20795223.5
(22) Date of filing: 18.03.2020
(51) Int. Cl.: C03C 10/12

(54) **LI2O-AL2O3-SIO2-BASED CRYSTALLIZED GLASS**

(30) Priority: 23.04.2019 JP 2019081412
(71) Applicant: Nippon Electric Glass Co., Ltd., Otsu-shi, Shiga 520-8639 (JP)
(72) Inventor: YOKOTA, Yuki, Otsu-shi, Shiga 520-8639 (JP)
(74) Representative: Tetzner, Michael
(86) International application number: PCT/JP2020/012039
(87) International publication number: WO 2020/217792

(57) **Abstract**

Provided is a Li₂O-Al₂O₃-SiO₂-based crystallized glass that has a high permeability to light in an ultraviolet to infrared range and is less susceptible to breakage. A Li₂O-Al₂O₃-SiO₂-based crystallized glass contains, in terms of % by mass, 40 to 90% SiO₂, 1 to 10% Li₂O, 5 to 30% Al₂O₃, 0 to 20% SnO₂, over 0 to 20% ZrO₂, 0 to below 2% TiO₂, 0 to 10% MgO, and 0 to 10% P₂O₅ and includes a β-spodumene solid solution precipitated as a main crystalline phase.

## Description

### [Technical Field]

The present invention relates to Li₂O-Al₂O₃-SiO₂-based crystallized glasses.

### [Background Art]

In recent years, portable electronic devices, such as cellular phones, notebook-size personal computers, and PDAs (personal data assistances), are being required to reduce their size and weight. With the above trend, the packaging space for semiconductor chips for use in these electronic devices is being severely restricted and, therefore, high-density packaging of semiconductor chips is a challenge. To this end, high-density packaging of semiconductor packages is sought by three-dimensional packaging technology, i.e., by stacking semiconductor chips and interconnecting the semiconductor chips by wiring.

As disclosed in Patent Literature 1, fan-out wafer-level packaging (WLP) includes, after molding a plurality of semiconductor chips with a resin seal material to form a fabricated substrate, the step of forming wiring on one surface of the fabricated substrate and the step of forming solder bumps thereon. These steps involve heat treatment at approximately 200°C, which may cause the seal material to deform and thus cause the fabricated substrate to change in dimension. In order to reduce the dimensional change of the fabricated substrate, it is effective to use a support substrate for supporting the fabricated substrate. In order to effectively reduce the dimensional change of the fabricated substrate having relatively low expansion, the support substrate may be required to have low expansion characteristics.

To cope with this, it is considered to use as the support substrate a Li₂O-Al₂O₃-SiO₂-based crystallized glass in which Li₂O-Al₂O₃-SiO₂-based crystals, such as a β-quartz solid solution (Li₂O·Al₂O₃·nSiO₂ [where 2 ≤ n ≤ 4]) or a β-spodumene solid solution (Li₂O·Al₂O₃·nSiO₂ [where n > 4]), which are low-expansion crystals, are precipitated as a major crystalline phase.

### [Citation List]

### [Patent Literature]

[PTL 1]
JP-A-2016-113341

### [Summary of Invention]

### [Technical Problem]

However, a Li₂O-Al₂O₃-SiO₂-based crystallized glass in which a β-quartz solid solution is precipitated as a major crystalline phase has a large amount of volume contraction when the crystals are precipitated from a parent glass and, therefore, has a problem that it is likely to cause breakage, such as surface delamination or cracks. Furthermore, a Li₂O-Al₂O₃-SiO₂-based crystallized glass in which a β-spodumene solid solution is precipitated as a major crystalline phase has a small amount of volume contraction due to crystallization and is therefore less likely to cause breakage, but has a low permeability to light in an ultraviolet to infrared range and, therefore, has a problem that it has difficulty transmitting laser light (ultraviolet to infrared light) for use in fixing or separating a fabricated substrate to or from a glass substrate.

An object of the present invention is to provide a Li₂O-Al₂O₃-SiO₂-based crystallized glass that has a high permeability to light in an ultraviolet to infrared range and is less susceptible to breakage.

### [Solution to Problem]

A Li₂O-Al₂O₃-SiO₂-based crystallized glass according to the present invention contains, in terms of % by mass, 40 to 90% SiO₂, 1 to 10% Li₂O, 5 to 30% Al₂O₃, 0 to 20% SnO₂, over 0 to 20% ZrO₂, 0 to below 2% TiO₂, 0 to 10% MgO, and 0 to 10% P₂O₅ and includes a β-spodumene solid solution precipitated as a main crystalline phase. In a Li₂O-Al₂O₃-SiO₂-based crystallized glass including a β-spodumene solid solution precipitated therein, the crystal grain size of the β-spodumene solid solution is as large as approximately 500 nm, which make it likely that the crystallized glass causes light scattering. Therefore, the permeability to ultraviolet to infrared light tends to decrease. However, it was found that the decrease in permeability to light due to light scattering can sufficiently be made up for by making the content of TiO₂ as small as less than 2% by mass. Furthermore, a Li₂O-Al₂O₃-SiO₂-based crystallized glass in which a β-spodumene solid solution is precipitated as a major crystalline phase has a small amount of volume contraction when the crystals are precipitated from a parent glass and, therefore, it is less likely to cause breakage.

The Li₂O-Al₂O₃-SiO₂-based crystallized glass according to the present invention preferably further contains, in terms of % by mass, 0 to 10% Na₂O, 0 to 10% K₂O, 0 to 10% CaO, 0 to 10% SrO, 0 to 10% BaO, 0 to 10% ZnO, and 0 to 10% B₂O₃.

The Li₂O-Al₂O₃-SiO₂-based crystallized glass according to the present invention preferably contains, in terms of % by mass, 0 to 2% SnO₂.

The Li₂O-Al₂O₃-SiO₂-based crystallized glass according to the present invention preferably contains, in terms of % by mass, 1.5 to 20% ZrO₂ and over 0 to 10% MgO.

The Li₂O-Al₂O₃-SiO₂-based crystallized glass according to the present invention preferably further contains, in terms of % by mass, 0.10% or less Fe₂O₃.

In the Li₂O-Al₂O₃-SiO₂-based crystallized glass according to the present invention, a mass ratio of MgO/(Li₂O+MgO) is preferably 0.0001 or more. The term "MgO/ (Li₂O+MgO)" used herein refers to the value of the content of MgO divided by the total content of Li₂O and MgO.

In the Li₂O-Al₂O₃-SiO₂-based crystallized glass according to the present invention, a mass ratio of Al₂O₃/(SnO₂+ZrO₂) is preferably 9 or less. The term "Al₂O₃/(SnO₂+ZrO₂)" used herein refers to the value of the content of Al₂O₃ divided by the total content of SnO₂ and ZrO₂.

In the Li₂O-Al₂O₃-SiO₂-based crystallized glass according to the present invention, a mass ratio of SnO₂/(SnO₂+ZrO₂+TiO₂+P₂O₅+B₂O₃) is preferably 0.01 or more. The term "SnO₂/(SnO₂+ZrO₂+TiO₂+P₂O₅+B₂O₃)" used herein refers to the value of the content of SnO₂ divided by the total content of SnO₂, TiO₂, ZrO₂, and P₂O₅.

In the Li₂O-Al₂O₃-SiO₂-based crystallized glass according to the present invention, a mass ratio of ZrO₂/Li₂O is preferably 0.4 or more. The term "ZrO₂/Li₂O" used herein refers to the value of the content of ZrO₂ divided by the content of Li₂O.

In the Li₂O-Al₂O₃-SiO₂-based crystallized glass according to the present invention, a mass ratio of (SnO₂+ZrO₂+TiO₂)/(SiO₂+Al₂O₃+Li₂O+Na₂O+K₂O+MgO+CaO+SrO+BaO+ZnO+ B₂O₃+P₂O₅) is preferably 0.03 or more. The term "(SnO₂+ZrO₂+TiO₂)/(SiO₂+Al₂O₃+Li₂O+Na₂O+K₂O+MgO+CaO+SrO+BaO+ZnO +B₂O₃+P₂O₅)" used herein refers to the value of the total content of SnO₂, ZrO₂, and TiO₂ divided by the total content of SiO₂, Al₂O₃, Li₂O, Na₂O, K₂O, MgO, CaO, SrO, BaO, ZnO, B₂O₃, and P₂O₅.

In the Li₂O-Al₂O₃-SiO₂-based crystallized glass according to the present invention, a mass ratio of (SiO₂+Al₂O₃)/Li₂O is preferably 20 or more. The term " (SiO₂+Al₂O₃)/Li₂O" used herein refers to the value of the total content of SiO₂ and Al₂O₃ divided by the content of Li₂O.

In the Li₂O-Al₂O₃-SiO₂-based crystallized glass according to the present invention, a mass ratio of (Li₂O+Na₂O+K₂O)/ZrO₂ is preferably 3.0 or less. The term "(Li₂O+Na₂O+K₂O)/ZrO₂" used herein refers to the value of the total content of Li₂O, Na₂O, and K₂O divided by the content of ZrO₂.

In the Li₂O-Al₂O₃-SiO₂-based crystallized glass according to the present invention, a mass ratio of TiO₂/ZrO₂ is preferably 0.0001 to 5.0. The term "TiO₂/ZrO₂" used herein refers to the value of the content of TiO₂ divided by the content of ZrO₂.

In the Li₂O-Al₂O₃-SiO₂-based crystallized glass according to the present invention, a mass ratio of TiO₂/(TiO₂+Fe₂O₃) is preferably 0.001 to 0.999. The term "TiO₂/(TiO₂+Fe₂O₃)" used herein refers to the value of the content of TiO₂ divided by the total content of TiO₂ and Fe₂O₃.

The Li₂O-Al₂O₃-SiO₂-based crystallized glass according to the present invention preferably contains, in terms of % by mass, less than 0.05% HfO₂+Ta₂O₅. The term "HfO₂+Ta₂O₅" used herein refers to the total content of HfO₂ and Ta₂O₅.

The Li₂O-Al₂O₃-SiO₂-based crystallized glass according to the present invention preferably contains, in terms of % by mass, 7 ppm or less Pt.

The Li₂O-Al₂O₃-SiO₂-based crystallized glass according to the present invention preferably contains, in terms of % by mass, 7 ppm or less Rh.

The Li₂O-Al₂O₃-SiO₂-based crystallized glass according to the present invention preferably contains, in terms of % by mass, 9 ppm or less Pt+Rh. The term "Pt+Rh" used herein refers to the total content of Pt and Rh.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 200°C. Thus, the crystallized glass can be suitably used for various applications requiring low expansibility.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 380°C.

The Li₂O-Al₂O₃-SiO₂-based crystallized glass according to the present invention preferably has a coefficient of thermal expansion of -20 × 10⁻⁷/°C to 30 × 10⁻⁷/°C at 20 to 750°C. Thus, the crystallized glass can be suitably used for various applications requiring low expansibility over a wide temperature range.

The Li₂O-Al₂O₃-SiO₂-based crystallized glass according to the present invention preferably has a colorless appearance.

The Li₂O-Al₂O₃-SiO₂-based crystallized glass according to the present invention preferably has a transmittance of 1% or more at a thickness of 2 mm and a wavelength of 360 nm. Thus, the crystallized glass can be suitably used for various applications requiring permeability to ultraviolet light.

The Li₂O-Al₂O₃-SiO₂-based crystallized glass according to the present invention preferably has a transmittance of 10% or more at a thickness of 2 mm and a wavelength of 555 nm. Thus, the crystallized glass can be suitably used for various applications requiring permeability to visible light.

The Li₂O-Al₂O₃-SiO₂-based crystallized glass according to the present invention preferably has a transmittance of 35% or more at a thickness of 2 mm and a wavelength of 1070 nm. Thus, the crystallized glass can be suitably used for various applications requiring permeability to infrared light.

A Li₂O-Al₂O₃-SiO₂-based crystallized glass according to the present invention has a transmittance of 1% or more at a thickness of 2 mm and a wavelength of 360 nm, has a coefficient of thermal expansion of -20 × 10⁻⁷/°C to 30 × 10⁻⁷/°C at 20 to 200°C, and includes a β-spodumene solid solution precipitated as a major crystalline phase.

### [Advantageous Effects of Invention]

The present invention enables provision of a Li₂O-Al₂O₃-SiO₂-based crystallized glass that has a high permeability to light in an ultraviolet to infrared range and is less susceptible to breakage.

### [Description of Embodiments]

A Li₂O-Al₂O₃-SiO₂-based crystallized glass according to the present invention contains, in terms of % by mass, 40 to 90% SiO₂, 1 to 10% Li₂O, 5 to 30% Al₂O₃, 0 to 20% SnO₂, over 0 to 20% ZrO₂, 0 to below 2% TiO₂, 0 to 10% MgO, and 0 to 10% P₂O₅ and includes a β-spodumene solid solution precipitated as a main crystalline phase.

First, reasons why the glass composition is limited as just described will be described below. In the following description of the respective contents of components, "%" refers to "% by mass" unless otherwise stated.

SiO₂ is a component that forms part of a glass network and also constitutes part of a Li₂O-Al₂O₃-SiO₂-based crystal. The content of SiO₂ is preferably 40 to 90%, 45 to 85%, 50 to 85%, 51 to 84%, 52 to 83%, 53 to 82%, 54 to 81%, 55 to 80%, 55 to 78%, 55 to 75%, 55 to 73%, 55 to 72%, 55 to 71%, 55 to 70%, 56 to 70%, 57 to 70%, 58 to 70%, 59 to 70%, 60 to 70%, 61 to 69%, 62 to 68%, or 63 to 67%, and particularly preferably 64 to 66%. If the content of SiO₂ is too small, the coefficient of thermal expansion tends to increase, so that a crystallized glass having excellent thermal shock resistance is less likely to be obtained. In addition, the chemical durability tends to decrease. On the other hand, if the content of SiO₂ is too large, the meltability of glass decreases and the viscosity of glass melt increases, so that the glass becomes difficult to clarify and difficult to form into shape, which makes the productivity likely to decrease. Furthermore, the time required for crystallization becomes long, so that the productivity is likely to decrease.

Li₂O is a constituent of a Li₂O-Al₂O₃-SiO₂-based crystal, and a component that largely influences the crystallinity and reduces the viscosity of glass to increase the meltability and formability of the glass. The content of Li₂O is preferably 1 to 10%, 2 to 10%, 2 to 9%, 2 to 8%, 2 to 7%, 2 to 6%, 2.1 to 6%, 2.2 to 6%, 2.3 to 6%, 2.4 to 6%, 2.5 to 6%, 2.5 to 5%, 2.5 to 4.9%, 2.5 to 4.8%, 2.5 to 4.7%, 2.5 to 4.6%, 2.5 to 4.5%, 2.6 to 4.4%, 2.7 to 4.3%, 2.8 to 4.2%, 2.9 to 4.1%, 3 to 4%, or 3.1 to 3.9%, and particularly preferably 3.2 to 3.8%. If the content of Li₂O is too small, mullite crystals tend to be precipitated to devitrify the glass. Furthermore, in crystallizing the glass, Li₂O-Al₂O₃-SiO₂-based crystals are less likely to be precipitated, so that a crystallized glass having excellent thermal shock resistance is difficult to obtain. In addition, the meltability of glass decreases and the viscosity of glass melt increases, so that the glass becomes difficult to clarify and difficult to form into shape, which makes the productivity likely to decrease. On the other hand, if the content of Li₂O is too large, the crystallinity is excessively high, so that the glass tends to be likely to devitrify and the crystallized glass becomes susceptible to breakage.

Al₂O₃ is a component that forms part of a glass network and also constitutes part of a Li₂O-Al₂O₃-SiO₂-based crystal. Furthermore, Al₂O₃ is a component that is located around a crystal nucleus and forms a core-shell structure. Because of the presence of a core-shell structure, a crystal nucleus component is less likely to be supplied from the outside of the shell, so that the crystal nuclei are less likely to become enlarged and a large number of fine crystal nuclei are likely to be formed. The content of Al₂O₃ is preferably 5 to 30%, 6 to 30%, 7 to 30%, 7 to 29%, 8 to 29%, 9 to 29%, 9 to 28%, 10 to 28%, 11 to 28%, 12 to 28%, 12 to 27%, 13 to 27%, 14 to 27%, 14 to 26%, 15 to 26%, 16 to 26%, 16.5 to 26%, 16.5 to 25.5%, 17 to 25.5%, 17 to 25%, 17.5 to 25%, 18 to 24.5%, 18 to 24%, 18.5 to 24%, 19 to 24%, 19.5 to 24%, 19.5 to 23.5%, 20 to 23.5%, or 20.5 to 23%, and particularly preferably 21 to 22.5%. If the content of Al₂O₃ is too small, the coefficient of thermal expansion tends to increase, so that a crystallized glass having excellent thermal shock resistance is less likely to be obtained. In addition, the chemical durability tends to decrease. Furthermore, the crystal nuclei become large, so that the crystallized glass is likely to be cloudy. On the other hand, if the content of Al₂O₃ is too large, the meltability of glass decreases and the viscosity of glass melt increases, so that the glass becomes difficult to clarify and difficult to form into shape, which makes the productivity likely to decrease. Furthermore, mullite crystals tend to be precipitated to devitrify the glass and the crystallized glass becomes susceptible to breakage.

SiO₂, Al₂O₃, and Li₂O are main constituents of a β-spodumene solid solution serving as a major crystalline phase and also main constituents of a β-quartz solid solution which is a precursor of the β-spodumene solid solution, and Li₂O and Al₂O₃ compensate each other for their charges and thus are incorporated into a SiO₂ skeleton to form a solid solution. When these three components are contained at a suitable ratio in the glass, crystallization efficiently progresses, so that a crystallized glass can be produced at low cost. Therefore, (SiO₂+Al₂O₃)/Li₂O is preferably 20 or more, 20.2 or more, 20.4 or more, 20.6 or more, or 20.8 or more, and particularly preferably 21 or more.

SnO₂ is a component acting as a fining agent. Furthermore, SnO₂ is also a nucleating component for precipitating crystals in the crystallization process. On the other hand, SnO₂ is also a component that, if it is contained much, significantly increases the tinting of the glass. The content of SnO₂ is preferably 0 to 20%, 0 to 18%, 0 to 16%, 0 to 14%, 0 to 12%, 0 to 10%, 0 to 8%, over 0 to 8%, 0.01 to 8%, 0.01 to 7%, 0.01 to 6%, 0.01 to 5%, 0.01 to 4%, 0.05 to 4%, 0.05 to 3.9%, 0.05 to 3.8%, 0.05 to 3.7%, 0.05 to 3.6%, 0.05 to 3.5%, 0.05 to 3.4%, 0.05 to 3.3%, 0.05 to 3.2%, 0.05 to 3.1%, 0.05 to 3%, 0.05 to 2.9%, 0.05 to 2.8%, 0.05 to 2.7%, 0.05 to 2.6%, 0.05 to 2.5%, 0.05 to 2.4%, 0.05 to 2.3%, 0.05 to 2.2%, or 0.05 to 2.1%, and particularly preferably 0.05 to 2%. If the content of SnO₂ is too large, the tinting of the crystallized glass increases. Furthermore, the raw material batch becomes expensive and, as a result, the production cost becomes high.

ZrO₂ is a nucleating component for precipitating crystals in the crystallization process. The content of ZrO₂ is preferably over 0 to 20%, over 0 to 18%, over 0 to 16%, over 0 to 14%, over 0 to 12%, over 0 to 10%, over 0 to 9%, over 0 to 8%, over 0 to 7%, over 0 to 6%, over 0 to 5.5%, over 0 to 5%, over 0 to 4.9%, 0.1 to 4.9%, 0.2 to 4.9%, 0.3 to 4.9%, 0.4 to 4.9%, 0.5 to 4.9%, 0.6 to 4.9%, 0.7 to 4.9%, 0.8 to 4.9%, 0.9 to 4.9%, 1 to 4.9%, 1.1 to 4.9%, 1.2 to 4.9%, 1.3 to 4.9%, 1.4 to 4.9%, 1.5 to 4.9%, 1.6 to 4.9%, 1.7 to 4.9%, 1.8 to 4.9%, 1.9 to 4.9%, 2 to 4.9%, 2.1 to 4.9%, 2.2 to 4.9%, 2.3 to 4.9%, 2.4 to 4.9%, 2.5 to 4.9%, 2.6 to 4.9%, 2.7 to 4.9%, over 2.7 to 4.9%, 2.8 to 4.9%, 3.0 to 4.8%, 3.1 to 4.7%, 3.2 to 4.6%, 3.3 to 4.5%, 3.4 to 4.4%, or 3.5 to 4.3%, and particularly preferably 3.6 to 4.2%. If the content of ZrO₂ is too small, the crystal nuclei may not be formed well, so that coarse crystals may precipitate to make the glass cloudy and subject to breakage. On the other hand, if the content of ZrO₂ is too large, coarse ZrO₂ crystals precipitate to make the glass devitrifiable and make the crystallized glass susceptible to breakage. Furthermore, the raw material batch becomes expensive and, as a result, the production cost becomes high.

ZrO₂ functions as a poorly soluble nucleating agent and Li₂O functions as a flux that promoting melting. Therefore, when ZrO₂/Li₂O is small, ZrO₂ can be efficiently melted. However, if ZrO₂/Li₂O is too small, the low-temperature viscosity excessively decreases, so that the glass becomes likely to flow in the nucleating process where heat treatment is performed at a relatively low temperature, which becomes a contributor to deformation. Furthermore, the excessive decrease in low-temperature viscosity causes the rate of nucleation to be excessively high, which may make it difficult to control the nucleation process. Therefore, ZrO₂/Li₂O is preferably 0.4 or more, 0.42 or more, 0.44 or more, 0.46 or more, 0.48 or more, 0.50 or more, 0.52 or more, 0.53 or more, 0.54 or more, 0.55 or more, or 0.56 or more, and particularly preferably 0.57 or more. If ZrO₂/Li₂O is too large, poorly soluble ZrO₂ tends to be insufficiently solved and remain as a devitrified product. Therefore, the upper limit of ZrO₂/Li₂O is preferably not more than 4.

SnO₂+ZrO₂ is preferably over 0 to 30%, 0.5 to 25%, 1 to 20%, 1.2 to 17.5%, 1.8 to 15%, 2 to 12.5%, 2.1 to 10%, 2.2 to 10%, 2.3 to 9.5%, 2.4 to 9%, 2.5 to 8.5%, 2.7 to 8%, 2.9 to 7.5%, 3.1 to 7.5%, 3.2 to 7.5%, 3.3 to 7.5%, or 3.4 to 7.5%, and particularly preferably 3.5 to 7.5%. If SnO₂+ZrO₂ is too small, the crystal nuclei are less likely to be precipitated and the glass is less likely to be crystallized. On the other hand, if SnO₂+ZrO₂ is too large, the crystal nuclei become large, so that the crystallized glass is likely to be cloudy.

The ratio Al₂O₃/(SnO₂+ZrO₂) is preferably 9 or less, 8.9 or less, 8.8 or less, 8.7 or less, 8.6 or less, 8.5 or less, 8.4 or less, 8.3 or less, 8.2 or less, 8.1 or less, 8 or less, 7.9 or less, 7.8 or less, 7.7 or less, 7.6 or less, 7.5 or less, 7.4 or less, 7.3 or less, 7.2 or less, 7.1 or less, 7 or less, 6.9 or less, 6.8 or less, 6.7 or less, 6.6 or less, 6.5 or less, 6.4 or less, 6.3 or less, 6.2 or less, 6.1 or less, 6 or less, 5.9 or less, 5.8 or less, 5.7 or less, or 5.6 or less, and particularly preferably 5.5 or less. If Al₂O₃/(SnO₂+ZrO₂) is too large, the crystal nuclei become large, so that the crystallized glass is likely to be cloudy.

TiO₂ is a nucleating component for precipitating crystals in the crystallization process. On the other hand, if TiO₂ is contained much in the glass, it significantly increases the tinting of the glass to decrease the permeability to light. Particularly, zirconia titanate-based crystals containing ZrO₂ and TiO₂ act as crystal nuclei, but electrons transition from the valence band of oxygen serving as a ligand to the conduction bands of zirconia and titanium serving as central metals (LMCT transition), which involves the tinting of the crystallized glass. Furthermore, if titanium remains in the remaining glass phase, LMCT transition may occur from the valence band of the SiO₂ skeleton to the conduction band of tetravalent titanium in the remaining glass phase. In addition, d-d transition occurs in trivalent titanium in the remaining glass phase, which involves the tinting of the crystallized glass. The coexistence of titanium and iron causes the glass to develop the tinting like ilmenite (FeTiO₃) and the coexistence of titanium and tin intensifies the yellowish tint of the glass and particularly tends to significantly decrease the permeability to light in an ultraviolet range. Therefore, the content of TiO₂ is preferably 0 to below 2%, 0 to 1.95%, 0 to 1.9%, 0 to 1.8%, 0 to 1.7%, 0 to 1.6%, 0 to 1.5%, 0 to 1.4%, 0 to 1.3%, 0 to 1.2%, 0 to 1.1%, 0 to 1.05%, 0 to 1%, 0 to 0.95%, 0 to 0.9%, 0 to 0.85%, 0 to 0.8%, 0 to 0.75%, 0 to 0.7%, 0 to 0.65%, 0 to 0.6%, 0 to 0.55%, 0 to 0.5%, 0 to 0.48%, 0 to 0.46%, 0 to 0.44%, 0 to 0.42%, 0 to 0.4%, 0 to 0.38%, 0 to 0.36%, 0 to 0.34%, 0 to 0.32%, 0 to 0.3%, 0 to 0.28%, 0 to 0.26%, 0 to 0.24%, 0 to 0.22%, 0 to 0.2%, 0 to 0.2%, 0 to 0.18%, 0 to 0.16%, 0 to 0.14%, or 0 to 0.12%, and particularly preferably 0 to 0.1%. However, TiO₂ is likely to be mixed as impurities into the glass. Therefore, if complete removal of TiO₂ is pursued, the raw material batch tends to be expensive to increase the production cost. In order to reduce the increase in production cost, the lower limit of the content of TiO₂ is preferably 0.0003% or more, 0.0005% or more, 0.001% or more, 0.005% or more, or 0.01% or more, and particularly preferably 0.02% or more.

TiO₂ and ZrO₂ are components that can each function as a crystal nucleus. Ti and Zr are congeners and are similar in electronegativity and ionic radius. Therefore, these elements are likely to take similar molecular conformations as oxides and the coexistence of TiO₂ and ZrO₂ is known to facilitate the occurrence of phase separation in the initial stage of crystallization. Hence, within a permissible range of tinting, TiO₂/ZrO₂ is preferably 0.0001 to 5.0, 0.0001 to 4.0, 0.0001 to 3.0, 0.0001 to 2.5, 0.0001 to 2.0, 0.0001 to 1.5, or 0.0001 to 1.0, and particularly preferably 0.0001 to 0.5. If TiO₂/ZrO₂ is too small, the raw material batch tends to be expensive to increase the production cost. On the other hand, if TiO₂/ZrO₂ is too large, the rate of crystal nucleation becomes low, so that the production cost may increase.

MgO is a component that can be incorporated into Li₂O-Al₂O₃-SiO₂-based crystals to form a solid solution together and increases the coefficient of thermal expansion of the Li₂O-Al₂O₃-SiO₂-based crystals. The content of MgO is preferably 0 to 10%, 0 to 9%, 0 to 8%, 0 to 7%, 0 to 6%, 0 to 5%, over 0 to 5%, over 0 to 4.9%, 0.1 to 4%, 0.2 to 3%, 0.3 to 2%, 0.4 to 1.5%, or 0.5 to 1%, and particularly preferably 0.6 to 0.9%. If the content of MgO is too large, crystals containing Mg precipitate to make the glass devitrifiable and make the crystallized glass susceptible to breakage. Furthermore, the coefficient of thermal expansion tends to be excessively high.

In Li₂O-Al₂O₃-SiO₂-based crystallized glasses, if there is a large difference in coefficient of thermal expansion between the crystalline phase and the remaining glass phase after the completion of crystallization, breakage, such as surface delamination or cracks from the sample inside, may occur. If the solid solubility of Li in Li₂O-Al₂O₃-SiO₂-based crystals is excessively large, the amount of volume contraction during crystallization becomes large, so that the coefficient of thermal expansion of the crystalline phase after the completion of crystallization becomes excessively low and, therefore, a large difference in coefficient of thermal expansion between the crystalline phase and the remaining glass phase is likely to occur. As a result, the crystallized glass is likely to cause breakage, such as surface delamination or cracks. To cope with this, MgO/ (Li₂O+MgO) is preferably 0.0001 or more, 0.0005 or more, 0.001 or more, 0.005 or more, 0.01 or more, 0.012 or more, 0.014 or more, 0.016 or more, 0.018 or more, 0.02 or more, 0.022 or more, 0.024 or more, 0.026 or more, 0.028 or more, 0.03 or more, 0.032 or more, 0.034 or more, 0.036 or more, 0.038 or more, 0.04 or more, 0.041 or more, 0.042 or more, 0.043 or more, 0.044 or more, 0.045 or more, 0.046 or more, 0.047 or more, 0.048 or more, or 0.049 or more, and particularly preferably 0.05 or more. The upper limit of MgO/(Li₂O+MgO) is preferably not more than 0.9.

P₂O₅ is a component that suppresses the precipitation of coarse crystals and devitrification. Furthermore, P₂O₅ is a component that can be involved in the likelihood of phase separation during crystal nucleation. The content of P₂O₅ is preferably 0 to 10%, 0 to 9%, 0 to 8%, 0 to 7%, 0 to 6%, 0 to 5%, 0 to 4.5%, 0 to 4%, 0 to 3.9%, 0 to 3.8%, 0.1 to 3.5%, 0.2 to 3.2%, 0.3 to 2.9%, 0.6 to 2.6%, 0.9 to 2.3%, 1.1 to 2%, or 1.2 to 1.7%, and particularly preferably 1.3 to 1.5%. If the content of P₂O₅ is too large, the amount of Li₂O-Al₂O₃-SiO₂-based crystals precipitated becomes small, so that the coefficient of thermal expansion tends to increase. Furthermore, if the content of P₂O₅ is too large, the raw material batch becomes expensive and, as a result, the production cost becomes high.

The Li₂O-Al₂O₃-SiO₂-based crystallized glass according to the present invention may contain, in addition to the above components, the following components in its glass composition.

Na₂O is a component that can be incorporated into Li₂O-Al₂O₃-SiO₂-based crystals to form a solid solution together, and a component that largely influences the crystallinity and reduces the viscosity of glass to increase the meltability and formability of the glass. Furthermore, Na₂O is a component for controlling the coefficient of thermal expansion and refractive index of the crystallized glass. The content of Na₂O is preferably 0 to 10%, 0 to 9%, 0 to 8%, 0 to 7%, 0 to 6%, 0 to 5%, 0.1 to 4%, or 0.2 to 2%, and particularly preferably 0.3 to 1%. If the content of Na₂O is too large, crystals containing Na precipitate to make the glass devitrifiable and make the crystallized glass susceptible to breakage. Furthermore, the coefficient of thermal expansion tends to be excessively high.

K₂O is a component that can be incorporated into Li₂O-Al₂O₃-SiO₂-based crystals to form a solid solution together, and a component that largely influences the crystallinity and reduces the viscosity of glass to increase the meltability and formability of the glass. Furthermore, K₂O is a component for controlling the coefficient of thermal expansion and refractive index of the crystallized glass . The content of K₂O is preferably 0 to 10%, 0 to 9%, 0 to 8%, 0 to 7%, 0 to 6%, 0 to 5%, 0 to 3%, 0 to 2%, 0.1 to 1.5%, or 0.2 to 1%, and particularly preferably 0.3 to 0.5%. If the content of K₂O is too large, crystals containing K precipitate to make the glass devitrifiable and make the crystallized glass susceptible to breakage. Furthermore, the coefficient of thermal expansion tends to be excessively high.

Although Li₂O, Na₂O, and K₂O are components that increase the meltability and formability of the glass, if the contents of these components are too large, the low-temperature viscosity excessively decreases, so that the glass may excessively flow during crystallization. Furthermore, Li₂O, Na₂O, and K₂O are components that may deteriorate the weather resistance, water resistance, chemical resistance, and so on of the glass before crystallization. If the glass before crystallization is deteriorated by moisture or so on, a desired crystallization behavior and, in turn, desired properties may not be obtained. On the other hand, ZrO₂ is a component that functions as a nucleating agent and has the effect of preferentially crystallizing in an initial stage of crystallization to reduce the flow of the remaining glass . Furthermore, ZrO₂ has the effect of efficiently filling the voids of the glass network principally involving a SiO₂ skeleton to block the diffusion of protons, various chemical components, and so on in the glass network, thus increasing the weather resistance, water resistance, chemical resistance, and so on of the glass before crystallization. In order to obtain a crystallized glass having a desired shape and desired properties, (Li₂O+Na₂O+K₂O)/ZrO₂ should be suitably controlled. The ratio (Li₂O+Na₂O+K₂O)/ZrO₂ is preferably 3.0 or less, 2.8 or less, 2.6 or less, 2.5 or less, 2.48 or less, or 2.46 or less, and particularly preferably 2.45 or less.

CaO is a component that reduces the viscosity of glass to increase the meltability and formability of the glass. Furthermore, CaO is a component for controlling the coefficient of thermal expansion and refractive index of the crystallized glass. In addition, CaO is a component that can be incorporated into Li₂O-Al₂O₃-SiO₂-based crystals to form a solid solution together. The content of CaO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of CaO is too large, crystals containing Ca precipitate to make the glass devitrifiable and make the crystallized glass susceptible to breakage. Furthermore, the coefficient of thermal expansion tends to be excessively high.

SrO is a component that reduces the viscosity of glass to increase the meltability and formability of the glass. Furthermore, SrO is a component for controlling the coefficient of thermal expansion and refractive index of the crystallized glass. In addition, SrO is a component that can be incorporated into Li₂O-Al₂O₃-SiO₂-based crystals to form a solid solution together. The content of SrO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of SrO is too large, crystals containing Sr precipitate to make the glass devitrifiable and make the crystallized glass susceptible to breakage. Furthermore, the coefficient of thermal expansion tends to be excessively high.

BaO is a component that reduces the viscosity of glass to increase the meltability and formability of the glass. Furthermore, BaO is a component for controlling the coefficient of thermal expansion and refractive index of the crystallized glass. In addition, BaO is a component that can be incorporated into Li₂O-Al₂O₃-SiO₂-based crystals to form a solid solution together. The content of BaO is preferably 0 to 10%, 0 to 9%, 0 to 8%, 0 to 7%, 0 to 6%, 0 to 5%, 0 to 4%, 0.3 to 3%, 0.6 to 2.5%, or 0.9 to 2%, and particularly preferably 1.1 to 1.5%. If the content of BaO is too large, crystals containing Ba precipitate to make the glass devitrifiable and make the crystallized glass susceptible to breakage. Furthermore, the coefficient of thermal expansion tends to be excessively high.

ZnO is a component that reduces the viscosity of glass to increase the meltability and formability of the glass. Furthermore, ZnO is a component for controlling the coefficient of thermal expansion and refractive index of the crystallized glass. In addition, ZnO is a component that can be incorporated into Li₂O-Al₂O₃-SiO₂-based crystals to form a solid solution together. The content of ZnO is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of ZnO is too large, crystals containing Zn precipitate to make the glass devitrifiable and make the crystallized glass susceptible to breakage. Furthermore, the coefficient of thermal expansion tends to be excessively high.

B₂O₃ is a component that reduces the viscosity of glass to increase the meltability and formability of the glass. Furthermore, B₂O₃ is a component that can be involved in the likelihood of phase separation during crystal nucleation. The content of B₂O₃ is preferably 0 to 10%, 0 to 9%, 0 to 8%, 0 to 7%, 0 to 6%, 0 to 5%, 0 to 4%, 0 to 3%, 0 to 2%, or 0 to 1%, and particularly preferably 0 to 0.5%. If the content of B₂O₃ is too large, the glass is likely to devitrify and the crystallized glass becomes susceptible to breakage. Furthermore, the amount of B₂O₃ evaporated during melting becomes large, so that the environmental burden increases. In addition, if the content of B₂O₃ is too large, the raw material batch becomes expensive and, as a result, the production cost becomes high.

CaO, SrO, BaO, ZnO, and B₂O₃ may be mixed as impurities into the glass. Therefore, if complete removal of them is pursued, the raw material batch tends to be expensive to increase the production cost. If there is no problem with the permeability to light, in order to reduce the increase in production cost, the lower limit of the content of each of CaO, SrO, BaO, ZnO, and B₂O₃ is preferably 0.0001% or more, more preferably 0.0003% or more, and particularly preferably 0.0005% or more.

It is known that, in Li₂O-Al₂O₃-SiO₂-based crystallized glasses, phase separated regions are formed in the glass before crystal nucleation and, then, crystal nuclei made of ZrO₂, TiO₂, and so on are formed in the phase separated regions. Because SnO₂, ZrO₂, TiO₂, P₂O₅, and B₂O₃ are strongly involved in the formation of phase separation, SnO₂+ZrO₂+TiO₂+P₂O₅+B₂O₃ is preferably over 0 to 30%, 0.5 to 25%, 1 to 20%, 1.2 to 17.5%, 1.8 to 15%, 2 to 12.5%, 2.1 to 10%, 2.2 to 10%, 2.3 to 9.5%, 2.4 to 9%, 2.5 to 8.5%, 2.7 to 8%, 2.9 to 7.5%, 3.1 to 7.5%, 3.2 to 7.5%, 3.3 to 7.5%, or 3.4 to 7.5%, and SnO₂/(SnO₂+ZrO₂+TiO₂+P₂O₅+B₂O₃) is preferably 0.01 or more, 0.015 or more, 0.02 or more, 0.025 or more, 0.03 or more, 0.035 or more, 0.04 or more, 0.045 or more, 0.05 or more, 0.055 or more, 0.06 or more, 0.065 or more, 0.07 or more, 0.085 or more, 0.09 or more, 0.095 or more, 0.1 or more, 0.105 or more, 0.11 or more, 0.115 or more, 0.12 or more, or 0.125 or more, and particularly preferably 0.13 or more. If SnO₂+ZrO₂+TiO₂+P₂O₅+B₂O₃ is too small, phase separated regions are less likely to be formed and, therefore, the glass is less likely to be crystallized. On the other hand, if SnO₂+ZrO₂+TiO₂+P₂O₅+B₂O₃ is too large and/or SnO₂/(SnO₂+ZrO₂+TiO₂+P₂O₅+B₂O₃) is too small, phase separated regions become large, so that the crystallized glass is likely to be cloudy. There is no particular limitation as to the upper limit of SnO₂/(SnO₂+ZrO₂+TiO₂+P₂O₅+B₂O₃), but it is actually not more than 0.9.

Fe₂O₃ is a component that increases the tinting of the glass and, particularly, a component that significantly increases the tinting by interactions with TiO₂ and SnO₂. The content of Fe₂O₃ is preferably 0.10% or less, 0.08% or less, 0.06% or less, 0.05% or less, 0.04% or less, 0.035% or less, 0.03% or less, 0.02% or less, 0.015% or less, 0.013% or less, 0.012% or less, 0.011% or less, 0.01% or less, 0.009% or less, 0.008% or less, 0.007% or less, 0.006% or less, 0.005% or less, 0.004% or less, or 0.003% or less, and particularly preferably 0.002% or less. However, Fe₂O₃ is likely to be mixed as impurities into the glass. Therefore, if complete removal of Fe₂O₃ is pursued, the raw material batch tends to be expensive to increase the production cost. In order to reduce the increase in production cost, the lower limit of the content of Fe₂O₃ is preferably 0.0001% or more, 0.0002% or more, 0.0003% or more, or 0.0005% or more, and particularly preferably 0.001% or more.

In the case of coexistence of titanium and iron, the tinting like ilmenite (FeTiO₃) may develop. Particularly, in Li₂O-Al₂O₃-SiO₂-based crystallized glasses, titanium and iron components not precipitated as crystal nuclei or major crystals may remain in the remaining glass after crystallization to facilitate the development of the tinting. These components may be able to be reduced in amount in terms of design. However, because TiO₂ and Fe₂O₃ are likely to be mixed as impurities into the glass, if complete removal of them is pursued, the raw material batch tends to be expensive to increase the production cost. Therefore, in order to reduce the production cost, the glass may contain TiO₂ and Fe₂O₃ within the above-described ranges . In order to further reduce the production cost, the glass may contain both the components within a permissible range of tinting. In this case, TiO₂/(TiO₂+Fe₂O₃) is preferably 0.001 to 0.999, 0.001 to 0.998, 0.001 to 0.997, or 0.001 to 0.9996, and particularly preferably 0.001 to 0.995.

Generally, a β-spodumene solid solution serving as a major crystalline phase in the present invention and a β-quartz solid solution as a precursor of the β-spodumene solid solution are each constituted of SiO₂, Al₂O₃, Li₂O, and so on, and the β-spodumene solid solution has a larger area of voids in the crystal and more easily incorporates an alkali metal or an alkaline earth metal thereinto to form a solid solution together. Therefore, the β-spodumene solid solution is constituted in a form containing any or all of SiO₂, Al₂O₃, Li₂O, Na₂O, K₂O, MgO, CaO, SrO, BaO, ZnO, B₂O₃, and P₂O₅. SnO₂, ZrO₂, and TiO₂ can also be incorporated into a β-spodumene solid solution from the aspect of ionic radius, but these components often cause phase separation in the initial stage of crystallization to precipitate as crystal nuclei. For this reason, these components have a lower likelihood of being incorporated into the β-spodumene solid solution to form a solid solution together as compared to SiO₂, Al₂O₃, and so on and are highly likely to be present in phases (crystal nuclei, remaining glass or so on) different from the major crystalline phase. If the refractive index difference between the major crystalline phase and any other phase is large, the glass is likely to refract short-wavelength light, so that a desired permeability to light may not be obtained. Therefore, (SnO₂+ZrO₂+TiO₂)/(SiO₂+Al₂O₃+Li₂O+Na₂O+K₂O+MgO+CaO+SrO+BaO+ZnO+ B₂O₃+P₂O₅) is preferably 0.03 or more, 0.035 or more, 0.04 or more, or 0.045 or more, and particularly preferably 0.05 or more. If (SnO₂+ZrO₂+TiO₂)/(SiO₂+Al₂O₃+Li₂O+Na₂O+K₂O+MgO+CaO+SrO+BaO+ZnO+ B₂O₃+P₂O₅) is too large, devitrified products of ZrO₂, SnO₂ or so on are likely to precipitate. There is no particular limitation as to the upper limit of (SnO₂+ZrO₂+TiO₂)/(SiO₂+Al₂O₃+Li₂O+Na₂O+K₂O+MgO+CaO+SrO+BaO+ZnO+ B₂O₃+P₂O₅), but it is actually not less than 0.1.

Pt is a component that can be incorporated in a state of ions, colloid, metal or so on into the glass and causes the glass to develop a yellowish to ginger tint. Furthermore, this tendency is significant after crystallization. In addition, intensive studies have shown that the incorporation of Pt may cause the crystallized glass to be influenced in nucleation and crystallizing behavior, so that the crystallized glass may be likely to be cloudy. Therefore, the content of Pt is preferably 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.55 ppm or less, 0.5 ppm or less, 0.45 ppm or less, 0.4 ppm or less, or 0.35 ppm or less, and particularly preferably 0.3 ppm or less. Although the incorporation of Pt should be avoided as much as possible, there may be a case where, with the use of general melting facilities, Pt members need to be used in order to obtain a homogeneous glass. Therefore, if complete removal of Pt is pursued, the production cost tends to increase. In the absence of any adverse effect in terms of tinting, in order to reduce the increase in production cost, the lower limit of the content of Pt is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more. Furthermore, so long as the tinting is at an acceptable level, Pt may be used as a nucleating agent for promoting the precipitation of the major crystalline phase, as with ZrO₂ or TiO₂. In doing so, Pt may be used alone as a nucleating agent or used as a nucleating agent in combination with other components. In using Pt as a nucleating agent, its form (colloid, metallic crystals or so on) is not particularly limited.

Rh is a component that can be incorporated in a state of ions, colloid, or metal or so on into the glass and tends to cause the glass to develop a yellowish to ginger tint and make the crystallized glass cloudy, like Pt. Therefore, the content of Rh is preferably 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.55 ppm or less, 0.5 ppm or less, 0.45 ppm or less, 0.4 ppm or less, or 0.35 ppm or less, and particularly preferably 0.3 ppm or less. Although the incorporation of Rh should be avoided as much as possible, there may be a case where, with the use of general melting facilities, Rh members need to be used in order to obtain a homogeneous glass. Therefore, if complete removal of Rh is pursued, the production cost tends to increase. In the absence of any adverse effect in terms of tinting, in order to reduce the increase in production cost, the lower limit of the content of Rh is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more. Furthermore, so long as the tinting is at an acceptable level, Rh may be used as a nucleating agent, as with ZrO₂ or TiO₂. In doing so, Rh may be used alone as a nucleating agent or used as a nucleating agent in combination with other components . In using Rh as a nucleating agent, its form (colloid, metallic crystals or so on) is not particularly limited.

In addition, Pt+Rh is preferably 9 ppm or less, 8 ppm or less, 7 ppm or less, 6 ppm or less, 5 ppm or less, 4.75 ppm or less, 4.5 ppm or less, 4.25 ppm or less, 4 ppm or less, 3.75 ppm or less, 3.5 ppm or less, 3.25 ppm or less, 3 ppm or less, 2.75 ppm or less, 2.5 ppm or less, 2.25 ppm or less, 2 ppm or less, 1.75 ppm or less, 1.5 ppm or less, 1.25 ppm or less, 1 ppm or less, 0.95 ppm or less, 0.9 ppm or less, 0.85 ppm or less, 0.8 ppm or less, 0.75 ppm or less, 0.65 ppm or less, 0.6 ppm or less, 0.55 ppm or less, 0.5 ppm or less, 0.45 ppm or less, 0.4 ppm or less, or 0.35 ppm or less, and particularly preferably 0.3 ppm or less. Although the incorporation of Pt and Rh should be avoided as much as possible, there may be a case where, with the use of general melting facilities, Pt members and Rh members need to be used in order to obtain a homogeneous glass. Therefore, if complete removal of Pt and Rh is pursued, the production cost tends to increase. So long as the tinting is at an acceptable level, in order to reduce the increase in production cost, the lower limit of Pt+Rh is preferably 0.0001 ppm or more, 0.001 ppm or more, 0.005 ppm or more, 0.01 ppm or more, 0.02 ppm or more, 0.03 ppm or more, 0.04 ppm or more, 0.05 ppm or more, or 0.06 ppm or more, and particularly preferably 0.07 ppm or more.

In developing a glass material, it is general to produce glasses having various compositions using various crucibles. Therefore, platinum and rhodium evaporated from crucibles are often present in the interior of an electric furnace for use in melting. It has been confirmed that Pt and Rh present in the interior of an electric furnace is incorporated into glass. In order to control the amount of Pt and Rh incorporated, not only the raw materials for use and the material for the crucible may be selected, but also a lid made of quartz may be fitted on the crucible or the melting temperature or melting time may be reduced. Thus, it is possible to control the content of Pt and Rh in the glass.

As₂O₃ and Sb₂O₃ are highly toxic and may contaminate the environment, for example, during the production process of glass or during treatment of waste glass. Therefore, the Li₂O-Al₂O₃-SiO₂-based crystallized glass according to the present invention is preferably substantially free of these components (specifically, the content of them is less than 0.1% by mass).

In the absence of any adverse effect in terms of tinting, the Li₂O-Al₂O₃-SiO₂-based crystallized glass according to the present invention may contain, in addition to the above components, minor components, including H₂, CO₂, CO, H₂O, He, Ne, Ar, and N₂, each up to 0.1%. Furthermore, when Ag, Au, Pd, Ir, V, Cr, Sc, Ce, Pr, Pm, Sm, Eu, Gd, Tb, Dy, Ho, Er, Tm, Yb, Lu, Ac, Th, Pa, U, and so on are deliberately incorporated into the glass, the raw material cost increases, so that the production cost tends to increase. Meanwhile, when a glass containing Ag or Au is subjected to light irradiation or heat treatment, agglomerates of these components are formed and crystallization can be promoted based on these agglomerates. Moreover, Pd and so on have various catalytic actions. When the glass contains these components, the glass and the crystallized glass can be given specific functions. In view of the above circumstances, when being aimed at giving the function of promoting crystallization or other functions, the glass may contain each of the above components in an amount of 1% or less, 0.5% or less, 0.3% or less, or 0.1% or less. Otherwise, the content of each of the above components is preferably 500 ppm or less, 300 ppm or less, or 100 ppm or less, and particularly preferably 10 ppm or less.

Furthermore, in the absence of any adverse effect in terms of tinting, the Li₂O-Al₂O₃-SiO₂-based crystallized glass according to the present invention may contain SO₃, MnO, Cl₂, Y₂O₃, MoO₃, La₂O₃, WO₃, HfO₂, Ta₂O₅, Nd₂O₃, Nb₂O₅, RfO₂, and so on up to 10% in total. However, the raw material batch of the above components is expensive, so that the production cost tends to increase. Therefore, these components may not be incorporated into the glass unless the circumstances are exceptional. Particularly, HfO₂ involves a high raw material cost and Ta₂O₅ may become a conflict mineral. Therefore, the total content of these components is preferably 5% or less, 4% or less, 3% or less, 2% or less, 1% or less, 0.5% or less, 0.4% or less, 0.3% or less, 0.2% or less, 0.1% or less, 0.05% or less, less than 0.05%, 0.049% or less, 0.048% or less, 0.047% or less, or 0.046% or less, and particularly preferably 0.045% or less.

The Li₂O-Al₂O₃-SiO₂-based crystallized glass according to the present invention having the above composition is likely to have a colorless appearance.

In the Li₂O-Al₂O₃-SiO₂-based crystallized glass according to the present invention, the transmittance at a thickness of 2 mm and a wavelength of 360 nm is preferably 1% or more, 5% or more, 10% or more, 15% or more, 20% or more, 25% or more, 30% or more, 35% or more, 40% or more, 45% or more, 46% or more, 47% or more, 48% or more, or 49% or more, and particularly preferably 50% or more. In applications requiring to transmit ultraviolet light, if the transmittance at a wavelength of 360 nm is too low, a desired transmission ability may not be able to be obtained. Particularly, in using a YAG laser or so on, the transmittance at a wavelength of 360 nm is preferably higher.

In the Li₂O-Al₂O₃-SiO₂-based crystallized glass according to the present invention, the transmittance at a thickness of 2 mm and a wavelength of 555 nm is preferably 10% or more, 15% or more, 20% or more, 30% or more, 35% or more, 40% or more, 45% or more, 50% or more, 55% or more, 60% or more, 61% or more, 62% or more, 63% or more, 64% or more, 65% or more, 66% or more, 67% or more, 68% or more, or 69% or more, and particularly preferably 70% or more. In applications requiring to transmit visible light, if the transmittance at a wavelength of 555 nm is too low, a desired transmission ability may not be able to be obtained.

In the Li₂O-Al₂O₃-SiO₂-based crystallized glass according to the present invention, the transmittance at a thickness of 2 mm and a wavelength of 1070 nm is preferably 35% or more, 40% or more, 45% or more, 50% or more, 55% or more, 60% or more, 65% or more, 70% or more, 71% or more, 72% or more, 73% or more, 74% or more, 75% or more, 76% or more, 77% or more, 78% or more, 79% or more, 80% or more, 81% or more, 82% or more, 83% or more, or 84% or more, and particularly preferably 85% or more. If the transmittance at a wavelength of 1070 nm is too low, the glass is likely to become greenish.

In the Li₂O-Al₂O₃-SiO₂-based crystallized glass according to the present invention, the rate of transmittance change at a thickness of 2 mm and a wavelength of 360 nm between before and after crystallization is preferably 95% or less, 92.5% or less, 90% or less, 87.5% or less, 85% or less, 82.5% or less, 80% or less, 77.5% or less, 75% or less, 72.5% or less, 70% or less, or 68.5% or less, and particularly preferably 68% or less. By making the rate of transmittance change between before and after crystallization small, the transmittance after crystallization can be predicted and controlled before crystallization, so that a desired transmission ability can be easily obtained after crystallization. The rate of transmittance change between before and after crystallization is preferably smaller not only at a wavelength of 360 nm, but also over the entire wavelength range. The term "rate of transmittance change between before and after crystallization" means {((transmittance (%) before crystallization)-(transmittance (%) after crystallization))/(transmittance (%) before crystallization)} × 100 (%).

The Li₂O-Al₂O₃-SiO₂-based crystallized glass according to the present invention includes a β-spodumene solid solution precipitated as a major crystalline phase and is therefore likely to have a low coefficient of thermal expansion.

In the Li₂O-Al₂O₃-SiO₂-based crystallized glass according to the present invention, the coefficient of thermal expansion at 20 to 200°C is preferably -20 × 10⁻⁷/°C to 30 × 10⁻⁷/°C, -19 × 10⁻⁷/°C to 30 × 10⁻⁷/°C, -18 × 10⁻⁷/°C to 30 × 10⁻⁷/°C, -17 × 10⁻⁷/°C to 30 × 10⁻⁷/°C, -16 × 10⁻⁷/°C to 30 × 10⁻⁷/°C, -15 × 10⁻⁷/°C to 30 × 10⁻⁷/°C, -15 × 10⁻⁷/°C to 28 × 10⁻⁷/°C, -15 × 10⁻⁷/°C to 26 × 10⁻⁷/°C, -14.5 × 10⁻⁷/°C to 25 × 10⁻⁷/°C, -13.5 × 10⁻⁷/°C to 25 × 10⁻⁷/°C, -12.5 × 10⁻⁷/°C to 25 × 10⁻⁷/°C, -11.5 × 10⁻⁷/°C to 25 × 10⁻⁷/°C, -10.5 × 10⁻⁷/°C to 25 × 10⁻⁷/°C, -10 × 10⁻⁷/°C to 24.5 × 10⁻⁷/°C, -10 × 10⁻⁷/°C to 23.5 × 10⁻⁷/°C, -10 × 10⁻⁷/°C to 22.5 × 10⁻⁷/°C, -10 × 10⁻⁷/°C to 21.5 × 10⁻⁷/°C, -10 × 10⁻⁷/°C to 20.5 × 10⁻⁷/°C, -9.5 × 10⁻⁷/°C to 20 × 10⁻⁷/°C, -9 × 10⁻⁷/°C to 19.5 × 10⁻⁷/°C, -8.5 × 10⁻⁷/°C to 19 × 10⁻⁷/°C, -8 × 10⁻⁷/°C to 18.5 × 10⁻⁷/°C, -7.5 × 10⁻⁷/°C to 18 × 10⁻⁷/°C, -7 × 10⁻⁷/°C to 17.5 × 10⁻⁷/°C, -6.5 × 10⁻⁷/°C to 17 × 10⁻⁷/°C, -6 × 10⁻⁷/°C to 17 × 10⁻⁷/°C, -6 × 10⁻⁷/°C to 16.5 × 10⁻⁷/°C, -6 × 10⁻⁷/°C to 16 × 10⁻⁷/°C, -5.5 × 10⁻⁷/°C to 16 × 10⁻⁷/°C, -5 × 10⁻⁷/°C to 16 × 10⁻⁷/°C, or -5 × 10⁻⁷/°C to 15.5 × 10⁻⁷/°C, and particularly preferably -5 × 10⁻⁷/°C to 15 × 10⁻⁷/°C. If the coefficient of thermal expansion at 20 to 200°C is too low or too high, the dimensional change of the fabricated substrate is likely to be large.

In the Li₂O-Al₂O₃-SiO₂-based crystallized glass according to the present invention, the coefficient of thermal expansion at 20 to 380°C is preferably -20 × 10⁻⁷/°C to 30 × 10⁻⁷/°C, -19 × 10⁻⁷/°C to 30 × 10⁻⁷/°C, -18 × 10⁻⁷/°C to 30 × 10⁻⁷/°C, -17 × 10⁻⁷/°C to 30 × 10⁻⁷/°C, -16 × 10⁻⁷/°C to 30 × 10⁻⁷/°C, -15 × 10⁻⁷/°C to 30 × 10⁻⁷/°C, -15 × 10⁻⁷/°C to 28 × 10⁻⁷/°C, -15 × 10⁻⁷/°C to 26 × 10⁻⁷/°C, -14.5 × 10⁻⁷/°C to 25 × 10⁻⁷/°C, -13.5 × 10⁻⁷/°C to 25 × 10⁻⁷/°C, -12.5 × 10⁻⁷/°C to 25 × 10⁻⁷/°C, -11.5 × 10⁻⁷/°C to 25 × 10⁻⁷/°C, -10.5 × 10⁻⁷/°C to 25 × 10⁻⁷/°C, -10 × 10⁻⁷/°C to 24.5 × 10⁻⁷/°C, -10 × 10⁻⁷/°C to 23.5 × 10⁻⁷/°C, -10 × 10⁻⁷/°C to 22.5 × 10⁻⁷/°C, -10 × 10⁻⁷/°C to 21.5 × 10⁻⁷/°C, -10 × 10⁻⁷/°C to 20.5 × 10⁻⁷/°C, -9.5 × 10⁻⁷/°C to 20 × 10⁻⁷/°C, -9 × 10⁻⁷/°C to 19.5 × 10⁻⁷/°C, -8.5 × 10⁻⁷/°C to 19 × 10⁻⁷/°C, -8 × 10⁻⁷/°C to 18.5 × 10⁻⁷/°C, -7.5 × 10⁻⁷/°C to 18 × 10⁻⁷/°C, -7 × 10⁻⁷/°C to 17.5 × 10⁻⁷/°C, -6.5 × 10⁻⁷/°C to 17 × 10⁻⁷/°C, -6 × 10⁻⁷/°C to 17 × 10⁻⁷/°C, -6 × 10⁻⁷/°C to 16.5 × 10⁻⁷/°C, -6 × 10⁻⁷/°C to 16 × 10⁻⁷/°C, -5.5 × 10⁻⁷/°C to 16 × 10⁻⁷/°C, -5 × 10⁻⁷/°C to 16 × 10⁻⁷/°C, or -5 × 10⁻⁷/°C to 15.5 × 10⁻⁷/°C, and particularly preferably -5 × 10⁻⁷/°C to 15 × 10⁻⁷/°C. If the coefficient of thermal expansion at 20 to 380°C is too low or too high, the dimensional change of the fabricated substrate is likely to be large.

In the Li₂O-Al₂O₃-SiO₂-based crystallized glass according to the present invention, the coefficient of thermal expansion at 20 to 750°C is preferably -20 × 10⁻⁷/°C to 30 × 10⁻⁷/°C, -19 × 10⁻⁷/°C to 30 × 10⁻⁷/°C, -18 × 10⁻⁷/°C to 30 × 10⁻⁷/°C, -17 × 10⁻⁷/°C to 30 × 10⁻⁷/°C, -16 × 10⁻⁷/°C to 30 × 10⁻⁷/°C, -15 × 10⁻⁷/°C to 30 × 10⁻⁷/°C, -15 × 10⁻⁷/°C to 28 × 10⁻⁷/°C, -15 × 10⁻⁷/°C to 26 × 10⁻⁷/°C, -14.5 × 10⁻⁷/°C to 25 × 10⁻⁷/°C, -13.5 × 10⁻⁷/°C to 25 × 10⁻⁷/°C, -12.5 × 10⁻⁷/°C to 25 × 10⁻⁷/°C, -11.5 × 10⁻⁷/°C to 25 × 10⁻⁷/°C, -10.5 × 10⁻⁷/°C to 25 × 10⁻⁷/°C, -10 × 10⁻⁷/°C to 24.5 × 10⁻⁷/°C, -10 × 10⁻⁷/°C to 23.5 × 10⁻⁷/°C, -10 × 10⁻⁷/°C to 22.5 × 10⁻⁷/°C, -10 × 10⁻⁷/°C to 21.5 × 10⁻⁷/°C, -10 × 10⁻⁷/°C to 20.5 × 10⁻⁷/°C, -9.5 × 10⁻⁷/°C to 20 × 10⁻⁷/°C, -9 × 10⁻⁷/°C to 19.5 × 10⁻⁷/°C, -8.5 × 10⁻⁷/°C to 19 × 10⁻⁷/°C, -8 × 10⁻⁷/°C to 18.5 × 10⁻⁷/°C, -7.5 × 10⁻⁷/°C to 18 × 10⁻⁷/°C, -7 × 10⁻⁷/°C to 17.5 × 10⁻⁷/°C, -6.5 × 10⁻⁷/°C to 17 × 10⁻⁷/°C, -6 × 10⁻⁷/°C to 17 × 10⁻⁷/°C, -6 × 10⁻⁷/°C to 16.5 × 10⁻⁷/°C, -6 × 10⁻⁷/°C to 16 × 10⁻⁷/°C, -5.5 × 10⁻⁷/°C to 16 × 10⁻⁷/°C, -5 × 10⁻⁷/°C to 16 × 10⁻⁷/°C, or -5 × 10⁻⁷/°C to 15.5 × 10⁻⁷/°C, and particularly preferably -5 × 10⁻⁷/°C to 15 × 10⁻⁷/°C. If the coefficient of thermal expansion at 20 to 750°C is too low or too high, the dimensional change of the fabricated substrate is likely to be large.

In the Li₂O-Al₂O₃-SiO₂-based crystallized glass according to the present invention, the Young's modulus is preferably 60 to 120 GPa, 70 to 110 GPa, 75 to 110 GPa, 75 to 105 GPa, or 80 to 105 GPa, and particularly preferably 80 to 100 GPa. If the Young's modulus is too low or too high, the crystallized glass becomes susceptible to breakage.

In the Li₂O-Al₂O₃-SiO₂-based crystallized glass according to the present invention, the modulus of rigidity is preferably 25 to 50 GPa, 27 to 48 GPa, or 29 to 46 GPa, and particularly preferably 30 to 45 GPa. If the modulus of rigidity is too low or too high, the crystallized glass becomes susceptible to breakage.

In the Li₂O-Al₂O₃-SiO₂-based crystallized glass according to the present invention, the Poisson's ratio is preferably 0.35 or less, 0.32 or less, 0.3 or less, 0.28 or less, or 0.26 or less, and particularly preferably 0.25 or less. If the Poisson's ratio is too large, the crystallized glass becomes susceptible to breakage.

Next, a description will be given of a method for producing a Li₂O-Al₂O₃-SiO₂-based crystallized glass according to the present invention.

First, a batch of raw materials prepared to provide a glass having the above-described composition is injected into a glass melting furnace, melted at 1500 to 1750°C, and then formed into shape. In glass melting, the flame fusion method using a burner, the electric melting method by electrical heating or so on may be used. Alternatively, melting using laser irradiation or plasma melting is also possible. Furthermore, the shape of the sample may be platy, fibrous, film-like, powdered, spherical, hollow or so on and is not particularly limited.

Next, the obtained crystallizable glass (a glass that can be crystallized) is subjected to heat treatment and thus crystallized. Specifically, the crystallizable glass is subjected to a heat treatment under conditions at 700 to 950°C (preferably 750 to 900°C) for 0.1 to 100 hours (preferably 1 to 60 hours) to form crystal nuclei, subsequently subjected to a heat treatment under conditions at 800 to 1050°C (preferably 800 to 1000°C) for 0.1 to 50 hours (preferably 0.2 to 10 hours), and then subjected to a heat treatment under conditions at 900 to 1200°C (preferably 950 to 1100°C) for 0.1 to 50 hours (preferably 0.1 to 10 hours) to grow crystals. Thus, a colorless Li₂O-Al₂O₃-SiO₂-based crystallized glass having β-spodumene solid solution crystals precipitated as a major crystalline phase therein can be obtained.

Furthermore, the crystallization may be promoted by applying sonic waves or electromagnetic waves to the glass. Moreover, the cooling of the crystallized glass in a high-temperature state may be performed at a cooling rate with a specific temperature gradient or in two or more levels of temperature gradients. In order to obtain a sufficient thermal shock resistance, it is desirable to control the cooling rate to sufficiently structurally relax the remaining glass phase. The average cooling rate from 800°C to 25°C is, in an innermost portion of the crystallized glass thickness farthest from the surface, preferably 3000°C/min, 1000°C/min or slower, 500°C/min or slower, 400°C/min or slower, 300°C/min or slower, 200°C/min or slower, 100°C/min or slower, 50°C/min or slower, 25°C/min or slower, or 10°C/min or slower, and particularly preferably 5°C/min or slower. In order to obtain dimensional stability over a long period, the above average cooling rate is more preferably 2.5°C/min or slower, 1°C/min or slower, 0.5°C/min or slower, 0.1°C/min or slower, 0.05°C/min or slower, 0.01°C/min or slower, 0.005°C/min or slower, 0.001°C/min or slower, or 0.0005°C/min or slower, and particularly preferably 0.0001°C/min or slower. Except for the case where physical strengthening treatment by air cooing, water cooling or the like is performed, the cooling rates of the crystallized glass from at the surface to in the innermost portion farthest from the surface preferably approximate to each other. The value of the cooling rate in the innermost portion farthest from the surface divided by the cooling rate at the surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the crystallized glass sample and long-term dimensional stability is more likely to be obtained. The cooling rate at the surface can be estimated by contact thermometry or with a radiation thermometer, while the temperature of the inner portions can be determined by placing the crystallized glass in a high-temperature state into a cooling medium, measuring the heat quantity and rate of heat quantity change of the cooling medium, and making an estimate from the measurement data, the respective specific heats of the crystallized glass and the cooling medium, the thermal conductivity, and so on.

The Li₂O-Al₂O₃-SiO₂-based crystallized glass according to the present invention may be subjected to chemical strengthening or other treatments. In relation to the treatment conditions for chemical strengthening treatment, the treatment time and treatment temperature are sufficient to be appropriately selected in consideration of the glass composition, the degree of crystallization, the type of molten salt, and so on. For example, for the purpose of facilitating chemical strengthening after crystallization, a glass composition containing much Na₂O, which will be contained in the remaining glass, may be selected or the degree of crystallization may be deliberately reduced. Furthermore, as to the molten salt, alkali metals, such as Li, Na, and K, may be contained singly or in combination. Moreover, aside from an ordinary single-step strengthening process, a multistep chemical strengthening process may be selected. Besides the above, the Li₂O-Al₂O₃-SiO₂-based crystallized glass according to the present invention may be treated by chemical strengthening or the like before crystallization, so that the content of Li₂O on the sample surface can be made smaller than inside of the sample. When such a glass is crystallized, the degree of crystallization on the sample surface becomes lower than inside of the sample, so that the coefficient of thermal expansion on the sample surface becomes relatively high and, thus, compressive stress due to a difference in thermal expansion can be applied to the sample surface. In addition, when the degree of crystallization on the sample surface is low, the amount of glass phase on the surface becomes large, so that the chemical resistance and gas barrier property can be increased depending on the selection of the glass composition.

### [Examples]

Hereinafter, the present invention will be described with reference to examples, but the present invention is not limited to the following examples. Tables 1 to 4 show working examples (Samples Nos. 1 to 5 and 7 to 25) of the present invention and a comparative example (Sample No. 6).

**[Table 1]**

| | | No.1 | No.2 | No.3 | No.4 | No.5 | No.6 |
|---|---|---|---|---|---|---|---|
| Composition [% by mass] | SiO₂ | 64.6 | 65.2 | 65.6 | 64.9 | 65.1 | 63.6 |
| | Li₂O | 3.6 | 3.7 | 3.7 | 4.1 | 4.1 | 3.6 |
| | Na₂O | 0.4 | 0.4 | 0.4 | 0.4 | 0.4 | 0.4 |
| | K₂O | 0.3 | 0.3 | 0.3 | 0.3 | 0.3 | 0.3 |
| | Al₂O₃ | 21.9 | 22.0 | 22.1 | 22.0 | 22.0 | 20.9 |
| | SnO₂ | 1.8 | 1.4 | 1.4 | 1.4 | 1.4 | 1.8 |
| | ZrO₂ | 4.1 | 3.7 | 3.7 | 3.6 | 3.7 | 4.1 |
| | TiO₂ | 0.0060 | 0.0078 | 0.0220 | 0.0341 | 0.0104 | 2.0 |
| | MgO | 0.7 | 0.7 | 0.2 | 0.7 | 0.4 | 0.7 |
| | CaO | 0.0 | 0.0 | 0.0 | 0.0 | 0.0 | 0.0 |
| | ZnO | 0.0 | 0.0 | 0.0 | 0.0 | 0.0 | 0.0 |
| | BaO | 1.2 | 1.2 | 1.2 | 1.2 | 1.2 | 1.2 |
| | SrO | 0.0 | 0.0 | 0.0 | 0.0 | 0.0 | 0.0 |
| | P₂O₅ | 1.4 | 1.4 | 1.4 | 1.4 | 1.4 | 1.4 |
| | B₂O₃ | 0.0 | 0.0 | 0.0 | 0.0 | 0.0 | 0.0 |
| | Fe₂O₃ | 0.015 | 0.015 | 0.015 | 0.015 | 0.015 | 0.015 |
| Composition [ppm%] | Pt | 0.05 | 0.03 | 0.02 | 0.04 | 0.01 | 0.00 |
| | Rh | 0.01 | 0.02 | 0.03 | 0.01 | 0.00 | 0.02 |
| | Pt+Rh | 006 | 0.05 | 0.05 | 0.05 | 0.01 | 0.02 |
| Mg/(Li+Mg) | | 0.163 | 0.159 | 0.051 | 0.146 | 0.089 | 0.163 |
| Al/(Sn+Zr) | | 3.712 | 4.314 | 4.333 | 4.400 | 4.314 | 3.542 |
| Sn/(Sn+Zr+Ti+P+B) | | 0.246 | 0.215 | 0.215 | 0.218 | 0.215 | 0.194 |
| Zr/Li | | 1.139 | 1.000 | 1.000 | 0.878 | 0.902 | 1.139 |
| (Sn+Zr+Ti)/(Si+Al+Li+Na+K+Mg+Ca+Sr+Ba+Zn+B+P) | | 0.063 | 0.054 | 0.054 | 0.053 | 0.054 | 0.086 |
| (Si+Al)/Li | | 24.028 | 23.568 | 23.703 | 21.195 | 21.244 | 23.472 |
| (Li+Na+K) /Zr | | 1.049 | 1.189 | 1.189 | 1.333 | 1.297 | 1.049 |
| Ti/Zr | | 0.001 | 0.002 | 0.006 | 0.009 | 0.003 | 0.488 |
| Ti/(Ti+Fe) | | 0.286 | 0.342 | 0.595 | 0.695 | 0.409 | 0.993 |
| Before Crystallization | | | | | | | |
| Transmittance[%] 2mmt | 360nm | 88.5 | 89.3 | 89.3 | 89.4 | 89.3 | Unmeasured |
| | 555nm | 91.3 | 91.5 | 91.6 | 91.6 | 91.5 | Unmeasured |
| | 1070nm | 91.3 | 91.3 | 91.5 | 91.4 | 91.4 | Unmeasured |
| After Crystallization | | | | | | | |
| Heat Treatment Conditions | | 810°C-20h | | | | | |
| | | 920°C-3h | | | | | |
| | | 1000°C-1h | | | | | |
| Transmittance[%] 2mmt | 360nm | 50.3 | 60.7 | 74 | 74.3 | 68.9 | 0 |
| | 555nm | 75.3 | 81.1 | 87.7 | 85.6 | 84.3 | 41.1 |
| | 1070nm | 89.3 | 90.2 | 90.7 | 90.3 | 90.3 | 65.2 |
| Precipitated Crystals | | *β* -S | *β* -S | *β* -S | *β* -S | *β* -S | *β* -S |
| *α*[× 10⁻⁷/°C] | 20-200°C | 1.2 | 1.4 | -2.4 | 8.1 | -0.4 | Unmeasured |
| | 20-380°C | 2.1 | 2 | -2 | 9.3 | 0.4 | Unmeasured |
| | 20-750°C | 3.2 | 3.2 | -0.4 | 12.7 | 3.2 | Unmeasured |
| Young's Modulus[GPa] | | 85 | Unmeasured | Unmeasured | Unmeasured | Unmeasured | Unmeasured |
| Modulus of Rigidity[GPa] | | 34 | Unmeasured | Unmeasured | Unmeasured | Unmeasured | Unmeasured |
| Poisson's Ratio | | 0.24 | Unmeasured | Unmeasured | Unmeasured | Unmeasured | Unmeasured |
| Breakage | | good | good | good | good | good | good |
| Color Tone | | good | good | good | good | good | poor |
| Rate of Transmittance Change between Before and After Crystallization[%] | | | | | | | |
| 360nm | | 43.2 | 32.0 | 17.1 | 16.9 | 22.8 | Unmeasured |
| 555nm | | 17.5 | 11.4 | 4.3 | 6.6 | 7.9 | Unmeasured |
| 1070nm | | 2.2 | 1.2 | 0.9 | 1.2 | 1.2 | Unmeasured |

**[Table 2]**

| | | No.7 | No.8 | No.9 | No.10 |
|---|---|---|---|---|---|
| Composition [% by mass] | SiO₂ | 66.5 | | | |
| | Li₂O | 3.63 | | | |
| | Na₂O | 0.41 | | | |
| | K₂O | 0.01 | | | |
| | Al₂O₃ | 21.8 | | | |
| | SnO₂ | 1.36 | | | |
| | ZrO₂ | 2.95 | | | |
| | TiO₂ | 0.0051 | | | 0.0003 |
| | MgO | 0.69 | | | |
| | CaO | 0.01 | | | |
| | ZnO | 0.00 | | | |
| | BaO | 1.20 | | | |
| | SrO | 0.01 | | | |
| | P₂O₅ | 1.40 | | | |
| | B₂O₃ | 0.00 | | | |
| | Fe₂O₃ | 0.0060 | | | 0.0001 |
| Composition [ppm%] | Pt | 0.03 | 0.03 | 0.02 | 0.01 |
| | Rh | 0.02 | 0.02 | 0.03 | 0.04 |
| | Pt+Rh | 0.05 | 0.05 | 0.05 | 0.05 |
| Mg/(Li+Mg) | | 0.160 | | | |
| Al/(Sn+Zr) | | 5.058 | | | |
| Sn/(Sn+Zr+Ti+P+B) | | 0.238 | | | |
| Zr/Li | | 0.813 | | | |
| (Sn+Zr+Ti)/(Si+Al+Li+Na+K+Mg+Ca+Sr+Ba+Zn+B+P) | | 0.045 | | | |
| (Si+Al)/Li | | 24.325 | | | |
| (Li+Na+K) /Zr | | 1.373 | | | |
| Ti/Zr | | 0.002 | | | 0.0001 |
| Ti/ (Ti+Fe) | | 0.459 | | | 0.750 |
| Before Crystallization | | | | | |
| Transmittance[%] 2mmt | 360nm | 89.5 | 89.5 | 89.5 | 89.7 |
| | 555nm | 91.5 | 91.5 | 91.5 | 91.7 |
| | 1070nm | 91.4 | 91.4 | 91.4 | 91.5 |
| After Crystallization | | | | | |
| Heat Treatment Conditions | | 780°C-3h | 780°C-3h | 780°C-3h | 780°C-3h |
| | | 890°C-1h | 890°C-1h | 890°C-1h | 890°C-1 h |
| | | 1010°C-0.5h | 1100°C-0.5h | 1100°C-0.25h | 1100°C-0.25h |
| Transmittance[%] 2mmt | 360nm | 53.3 | 25.3 | 35.5 | 45.0 |
| | 555nm | 76.4 | 49.4 | 58.8 | Unmeasured |
| | 1070nm | 89.3 | 70.6 | 81.4 | Unmeasured |
| Precipitated Crystals | | *β* -S | *β* -S | *β* -S | *β* -S |
| *α*[× 10⁻⁷/°C] | 20-200°C | 7.6 | Unmeasured | Unmeasured | 7.9 |
| | 20-380°C | 8.6 | Unmeasured | Unmeasured | Unmeasured |
| | 20-750°C | 11.7 | Unmeasured | Unmeasured | Unmeasured |
| Young's Modulus[GPa] | | 85 | Unmeasured | Unmeasured | Unmeasured |
| Modulus of Rigidity [GPa] | | 34 | Unmeasured | Unmeasured | Unmeasured |
| Poisson's Ratio | | 0.24 | Unmeasured | Unmeasured | Unmeasured |
| Breakage | | good | good | good | good |
| Color Tone | | good | good | good | good |
| Rate of Transmittance Change between Before and After Crystallization[%] | | | | | |
| 360nm | | 40.5 | 71.7 | 60.4 | 49.8 |
| 555nm | | 16.5 | 46.0 | 35.7 | Unmeasured |
| 1070nm | | 2.3 | 22.7 | 10.9 | Unmeasured |

**[Table 3]**

| | | No.11 | No.12 | No.13 | No.14 | No.15 | No.16 | No.17 |
|---|---|---|---|---|---|---|---|---|
| Composition [% by mass] | SiO₂ | 67.2 | 66.2 | 64.6 | 63.5 | 67.4 | 66.5 | 66.7 |
| | Li₂O | 3.55 | 3.74 | 3.6 | 2.92 | 3.68 | 3.50 | 2.20 |
| | Na₂O | 0.00 | 0.38 | 0.4 | 0.80 | 0.37 | 0.40 | 0.01 |
| | K₂O | 0.00 | 0.00 | 0.3 | 0.05 | 0.00 | 0.00 | 0.01 |
| | Al₂O₃ | 22.2 | 22.4 | 21.9 | 23.5 | 22.3 | 22.0 | 22.2 |
| | SnO₂ | 1.29 | 1.34 | 1.8 | 1.75 | 1.13 | 1.33 | 1.63 |
| | ZrO₂ | 2.63 | 3.84 | 4.1 | 3.72 | 2.62 | 3.00 | 3.90 |
| | TiO₂ | 0.0012 | 0.0031 | 0.0060 | 0.1990 | 0.0145 | 0.0058 | 0.0000 |
| | MgO | 1.21 | 0.69 | 0.0 | 1.14 | 1.24 | 1.20 | 0.0001 |
| | CaO | 0.10 | 0.00 | 0.0 | 0.01 | 0.00 | 0.00 | 0.02 |
| | ZnO | 0.62 | 0.00 | 0.7 | 0.00 | 0.00 | 0.00 | 1.66 |
| | BaO | 0.02 | 0.00 | 1.2 | 0.12 | 0.00 | 0.00 | 0.48 |
| | SrO | 0.33 | 0.01 | 0.0 | 0.00 | 0.00 | 0.01 | 0.34 |
| | P₂O₅ | 0.09 | 1.39 | 1.4 | 2.51 | 1.33 | 1.42 | 0.00 |
| | B₂O₃ | 0.63 | 0.00 | 0.0 | 0.00 | 0.01 | 0.00 | 0.82 |
| | Fe₂O₃ | 0.0021 | 0.0099 | 0.015 | 0.0081 | 0.0064 | 0.0057 | 0.0284 |
| Composition [ppm%] | Pt | 0.02 | 1.5 | 0 | 1.5 | 0.03 | 0.01 | Unmeasured |
| | Rh | 0.03 | 0.02 | 0.24 | 0.02 | 0.02 | 0.03 | Unmeasured |
| | Pt+Rh | 0.05 | 1.52 | 0.24 | 1.52 | 0.05 | 0.04 | Unmeasured |
| Mg/(Li+Mg) | | 0.254 | 0.156 | 0.000 | 0.281 | 0.252 | 0.255 | 0.000 |
| Al/(Sn+Zr) | | 5.663 | 4.324 | 3.712 | 4.296 | 5.947 | 5.081 | 4.014 |
| Sn/(Sn+Zr+Ti+P+B) | | 0.278 | 0.204 | 0.246 | 0.214 | 0.221 | 0.231 | 0.257 |
| Zr/Li | | 0.741 | 1.027 | 1.139 | 1.274 | 0.712 | 0.857 | 1.773 |
| (Sn+Zr+Ti)/(Si+Al+Li+Na+K+Mg+Ca+Sr+Ba+Zn+B+P) | | 0.041 | 0.055 | 0.063 | 0.060 | 0.039 | 0.046 | 0.059 |
| (Si+Al)/Li | | 25.183 | 23.690 | 24.028 | 29.795 | 24.375 | 25.286 | 40.409 |
| (Li+Na+K) /Zr | | 1.350 | 1.073 | 1.049 | 1.013 | 1.546 | 1.300 | 0.569 |
| Ti/Zr | | 0.000 | 0.001 | 0.001 | 0.053 | 0.006 | 0.002 | 0.000 |
| Ti/ (Ti+Fe) | | 0.364 | 0.238 | 0.286 | 0.961 | 0.694 | 0.504 | 0.000 |
| Before Crystallization | | | | | | | | |
| Transmittance[%] 2mmt | 360nm | 89.3 | 87.2 | Unmeasured | Unmeasured | 88.7 | 87.9 | Unmeasured |
| | 555nm | 91.6 | 91.4 | Unmeasured | Unmeasured | 91.5 | 91.4 | Unmeasured |
| | 1070nm | 91.5 | 91.4 | Unmeasured | Unmeasured | 91.5 | 91.5 | Unmeasured |
| After Crystallization | | | | | | | | |
| Heat Treatment Conditions | | 780°C-15h | 840°C-3h | 810°C-20h | 825°C-3h | 780°C-3h | 780°C-1h | 825°C-3h |
| | | 890°C-1h | 890°C-1h | 920°C-3h 1000°C- | 905-1h | 890°C-1h | 890°C-3h 1100°C- | 905-1h |
| | | 1100°C-0.5h | 1100°C-0.5h | 0.75h | 1050°C-0.5h | 1050°C-0.5h | 0.25h | 1050°C-0.5h |
| Transmittance[%] 2mmt | 360nm | Unmeasured | Unmeasured | Unmeasured | Unmeasured | 75.2 | 74.9 | Unmeasured |
| | 555nm | Unmeasured | Unmeasured | Unmeasured | Unmeasured | 86.9 | 85.8 | Unmeasured |
| | 1070nm | Unmeasured | Unmeasured | Unmeasured | Unmeasured | 90.7 | 90.5 | Unmeasured |
| Precipitated Crystals | | *β* -S | *β* -S | *β* -S | *β* -S | *β -*S | *β* -S | *β* -S |
| *α*[× 10⁻⁷/°C] | 20-200°C | Unmeasured | Unmeasured | Unmeasured | 6.9 | 8.0 | 8.3 | Unmeasured |
| | 20-380°C | Unmeasured | Unmeasured | Unmeasured | Unmeasured | Unmeasured | Unmeasured | Unmeasured |
| | 20-750°C | Unmeasured | Unmeasured | Unmeasured | Unmeasured | Unmeasured | Unmeasured | Unmeasured |
| Young's Modulus[GPa] | | Unmeasured | Unmeasured | Unmeasured | Unmeasured | Unmeasured | Unmeasured | Unmeasured |
| Modulus of Rigidity [GPa] | | Unmeasured | Unmeasured | Unmeasured | Unmeasured | Unmeasured | Unmeasured | Unmeasured |
| Poisson's Ratio | | Unmeasured | Unmeasured | Unmeasured | Unmeasured | Unmeasured | Unmeasured | Unmeasured |
| Breakage | | good | good | good | good | good | good | good |
| Color Tone | | good | good | good | good | good | good | good |
| Rate of Transmittance Change between Before and After Crystallization[%] | | | | | | | | |
| 360nm | | Unmeasured | Unmeasured | Unmeasured | Unmeasured | 15.2 | 14.8 | Unmeasured |
| 555nm | | Unmeasured | Unmeasured | Unmeasured | Unmeasured | 5.1 | 6.2 | Unmeasured |
| 1070nm | | Unmeasured | Unmeasured | Unmeasured | Unmeasured | 0.9 | 1.1 | Unmeasured |

**[Table 4]**

| | | No.18 | No.19 | No.20 | No.21 | No.22 | No.23 | No.24 | No.25 |
|---|---|---|---|---|---|---|---|---|---|
| Composition [% by mass] | SiO₂ | 65.2 | 65.0 | 65.3 | 64.6 | 65.8 | 65.7 | 65.9 | 67.2 |
| | Li₂O | 3.66 | 3.65 | 3.66 | 3.63 | 3.70 | 3.63 | 4.02 | 3.30 |
| | Na₂O | 0.85 | 0.39 | 0.39 | 0.40 | 0.40 | 0.87 | 0.37 | 0.37 |
| | K₂O | 0.30 | 0.99 | 0.28 | 0.29 | 0.00 | 0.10 | 0.00 | 0.00 |
| | Al₂O₃ | 21.8 | 21.8 | 21.9 | 21.5 | 22.1 | 21.7 | 22.2 | 21.6 |
| | SnO₂ | 1.36 | 1.39 | 1.36 | 1.37 | 1.27 | 1.17 | 0.45 | 1.18 |
| | ZrO₂ | 3.70 | 3.64 | 3.71 | 3.64 | 2.98 | 2.93 | 3.90 | 1.89 |
| | TiO₂ | 0.0092 | 0.0113 | 0.0321 | 0.0140 | 0.0029 | 0.0175 | 0.0080 | 0.156 |
| | MgO | 0.68 | 0.68 | 0.95 | 0.65 | 1.23 | 0.68 | 1.52 | 1.23 |
| | CaO | 0.001 | 0.001 | 0.001 | 0.001 | 0.001 | 0.00 | 0.35 | 0.00 |
| | ZnO | 0.001 | 0.001 | 0.001 | 0.001 | 0.00 | 0.00 | 0.01 | 0.01 |
| | BaO | 1.16 | 1.15 | 1.19 | 2.64 | 1.23 | 1.18 | 0.00 | 0.30 |
| | SrO | 0.00 | 0.00 | 0.00 | 0.00 | 0.002 | 0.014 | 0.001 | 0.00 |
| | P₂O₅ | 1.38 | 1.38 | 1.39 | 1.37 | 1.41 | 1.37 | 1.40 | 1.41 |
| | B₂O₃ | 0.00 | 0.00 | 0.00 | 0.00 | 0.00 | 0.00 | 0.00 | 0.00 |
| | Fe₂O₃ | 0.0080 | 0.0075 | 0.0083 | 0.0081 | 0.0082 | 0.0045 | 0.0033 | 0.0021 |
| Composition [ppm%] | Pt | 0.41 | 0.01 | 0.2 | 0.11 | 0.05 | 1.4 | 0.2 | 1.4 |
| | Rh | 0.00 | 0.01 | 0.02 | 0.02 | 0.02 | 0.03 | 0.03 | 0.03 |
| | Pt+Rh | 0.41 | 0.02 | 0.22 | 0.13 | 0.07 | 1.43 | 0.23 | 1.43 |
| Mg/(Li+Mg) | | 0.157 | 0.157 | 0.206 | 0.152 | 0.249 | 0.158 | 0.274 | 0.272 |
| Al/(Sn+Zr) | | 4.308 | 4.334 | 4.313 | 4.291 | 5.200 | 5.293 | 5.103 | 7.036 |
| Sn/(Sn+Zr+Ti+P+B) | | 0.211 | 0.216 | 0.210 | 0.214 | 0.224 | 0.213 | 0.078 | 0.255 |
| Zr/Li | | 1.011 | 0.997 | 1.015 | 1.003 | 0.805 | 0.807 | 0.970 | 0.573 |
| (Sn+Zr+Ti)/(Si+Al+Li+Na+K+Mg+Ca+Sr+Ba+Zn+B+P) | | 0.053 | 0.053 | 0.054 | 0.053 | 0.044 | 0.043 | 0.046 | 0.034 |
| (Si+Al)/Li | | 23.770 | 23.781 | 23.825 | 23.719 | 23.757 | 24.077 | 21.915 | 26.909 |
| (Li+Na+K)/Zr | | 1.300 | 1.382 | 1.166 | 1.187 | 1.376 | 1.570 | 1.126 | 1.942 |
| Ti/Zr | | 0.002 | 0.003 | 0.009 | 0.004 | 0.001 | 0.006 | 0.002 | 0.083 |
| Ti/(Ti+Fe) | | 0.535 | 0.601 | 0.795 | 0.633 | 0261 | 0.795 | 0.708 | 0.987 |

| Before Crystallization | | | | | | | | | |
|---|---|---|---|---|---|---|---|---|---|
| Transmittance[%] 2mmt | 360nm | Unmeasured | 86.2 | 87.4 | 86.5 | 86.3 | 87.8 | Unmeasured | Unmeasured |
| | 555nm | Unmeasured | 91.3 | 91.4 | 91.4 | 91.4 | 91.5 | Unmeasured | Unmeasured |
| | 1070nm | Unmeasured | 91.2 | 91.5 | 91.3 | 91.3 | 91.5 | Unmeasured | Unmeasured |

| After Crystallization | | | | | | | | | |
|---|---|---|---|---|---|---|---|---|---|
| Heat Treatment Conditions | | 855°C-3h | 855°C-3h | 840°C-3h | 840°C-3h | 765°C-3h | 905°C-3h | 780°C-10h | 780°C-10h |
| | | 920°C-1h | 920°C-1h | 920°C-1h | 920°C-1h | 890°C-1h | 920°C-1h | 890°C-2h | 890°C-1h |
| | | 1100°C-0.5h | 1100°C-0.5h | 1075°C-0.5h | 1040°C-0.5h | 1065°C-0.5h | 1035°C-0.5h | 1065°C-0.25h | 1050°C-0.25h |
| Transmittance[%] 2mmt | 360nm | Unmeasured | Unmeasured | Unmeasured | Unmeasured | Unmeasured | Unmeasured | Unmeasured | Unmeasured |
| | 555nm | Unmeasured | 80.2 | 81.3 | Unmeasured | Unmeasured | Unmeasured | Unmeasured | Unmeasured |
| | 1070nm | Unmeasured | 90.5 | 90.4 | Unmeasured | Unmeasured | Unmeasured | Unmeasured | Unmeasured |
| Precipitated Crystals | | *β* -S | *β* -S | *β* -S | *β* -S | *β* -S | *β* -S | *β* -S | *β* -S |
| α[×10⁻⁷/°C] | 20-200°C | Unmeasured | Unmeasured | Unmeasured | Unmeasured | 9.5 | 9.3 | Unmeasured | Unmeasured |
| | 20-380°C | Unmeasured | Unmeasured | Unmeasured | Unmeasured | 10.5 | 10.4 | Unmeasured | Unmeasured |
| | 20-750°C | Unmeasured | Unmeasured | Unmeasured | Unmeasured | Unmeasured | Unmeasured | Unmeasured | Unmeasured |
| Young's Modulus[GPa] | | Unmeasured | Unmeasured | Unmeasured | Unmeasured | Unmeasured | Unmeasured | Unmeasured | Unmeasured |
| Modulus of Rigidity[GPa] | | Unmeasured | Unmeasured | Unmeasured | Unmeasured | Unmeasured | Unmeasured | Unmeasured | Unmeasured |
| Poisson's Ratio | | Unmeasured | Unmeasured | Unmeasured | Unmeasured | Unmeasured | Unmeasured | Unmeasured | Unmeasured |
| Breakage | | good | good | good | good | good | good | good | good |
| Color Tone | | good | good | good | good | good | good | good | good |

| Rate of Transmittance Change between Before and After Crystallization[%] | | | | | | | | | |
|---|---|---|---|---|---|---|---|---|---|
| 360nm | | Unmeasured | Unmeasured | Unmeasured | Unmeasured | Unmeasured | Unmeasured | Unmeasured | Unmeasured |
| 555nm | | Unmeasured | 12.2 | 11.1 | Unmeasured | Unmeasured | Unmeasured | Unmeasured | Unmeasured |
| 1070nm | | Unmeasured | 0.8 | 1.2 | Unmeasured | Unmeasured | Unmeasured | Unmeasured | Unmeasured |

First, raw materials were formulated in the form of an oxide, a hydroxide, a carbonate or a nitrate or other forms so that each of glasses having respective compositions shown in Tables 1 to 4 was obtained, thus obtaining a glass batch. The obtained glass batch was put into a crucible containing platinum and rhodium, a rhodium-free strengthened-platinum crucible, a refractory crucible or a quartz crucible, melted therein at 1600°C for 4 to 100 hours, then melted at an increased temperature of 1650 to 1680°C for 0.5 to 20 hours, formed with a thickness of 5 mm by roll forming, and subjected to heat treatment at 700°C for 30 minutes using a slow-cooling furnace, and then the slow-cooling furnace was cooled at a rate of 100°C/h to room temperature, thus obtaining a crystallizable glass. The melting was performed by the electric melting method widely used for the development of glass materials.

It has been confirmed that, with the use of a glass composition of Sample No. 15, the glass can be melted by heating with a burner, ohmic heating, laser irradiation, or so on, and has also been confirmed that the glass sample can be subsequently formed into a semispherical, spherical, fibrous, powdered, thin-plate-like, tubular or valve-like shape by pressing, redrawing, spraying, a roll process, a film process, an overflow (fusion) process, a hand-brown process or other processes. It has also been confirmed that, with the use of a glass composition of Sample No. 16, the glass melt can be solidified into a plate by flowing it onto a liquid having a larger specific gravity than Sample No. 16 and subsequently cooling it. The glasses produced by every method described above were successfully crystallized under the conditions shown in the tables.

The respective contents of Pt and Rh in the produced samples were analyzed with an ICP-MS instrument (Agilent 8800 manufactured by Agilent Technologies, Inc.). First, the produced glass sample was ground and wetted with pure water and, then, perchloric acid, nitric acid, sulfuric acid, hydrofluoric acid or the like was added to the glass sample to fuse the glass sample with the acid. Thereafter, the respective contents of Pt and Rh in the sample were measured with ICP-MS. Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of Li₂O in the produced samples was analyzed with an atomic absorption spectrometer (contrAA 600 manufactured by Analytik Jena) . The manner of the analysis for this component was fundamentally the same as the analysis for Pt and Rh, such as the flow of fusion of the glass sample and the use of the calibration curve. With respect to the other components, the content of each component was measured with ICP-MS or atomic absorption spectrometry, like Pt, Rh, and Li₂O, or otherwise a calibration curve was made with an XRF analyzer (ZSX Primus IV manufactured by Rigaku Corporation) using as a sample for determining the calibration curve a glass sample the concentration of which had been known by previously examining it with an ICP-MS or atomic absorption spectrometer and the actual content of the component was determined from an XRF analysis value of the measurement sample based on the calibration curve. In doing XRF analysis, the tube voltage, the tube current, the exposure time, and so on were adjusted according to the analytical component as needed.

Each of the produced glasses was subjected to nucleation under the heat treatment conditions described in the tables, then subjected to crystal growth, and thus crystallized. The obtained crystallized glasses were evaluated in terms of transmittance, type of precipitated crystals, coefficient of thermal expansion, Young's modulus, modulus of rigidity, Poisson's ratio, breakage, and color tone.

The transmittance was evaluated by measuring a crystallized glass plate optically polished on both sides to have a thickness of 2 mm at different wavelengths with a spectro-photometer. A spectro-photometer V-670 manufactured by JASCO Corporation was used for the measurement. The spectro-photometer V-670 was fitted with an integrating sphere unit "ISN-723". Furthermore, the measurement wavelength range was 200 to 1500 nm, the scan speed was 200 nm/min, the sampling pitch was 1 nm, and the band widths were 5 nm in a wavelength range of 200 to 800 nm and 20 nm in the other wavelength range. Prior to the measurement, a baseline correction (adjustment to 100%) and a dark measurement (adjustment to 0%) were performed. The dark measurement was conducted in a state where a barium sulfate plate attached to ISN-723 was removed.

The precipitated crystals were evaluated with an X-ray diffractometer (an automated multipurpose horizontal X-ray diffractometer SmartLab manufactured by Rigaku corporation). The scan mode was 2θ/θ measurement, the scan type was a continuous scan, the scattering and divergent slit width was 1°, the light-receiving slit width was 0.2°, the measurement range was 10 to 60°, the measurement step was 0.1°, and the scan speed was 5°/min. A β-spodumene solid solution which is the type of precipitated crystals identified by the above evaluation is shown as "β-S" in the tables.

The coefficient of thermal expansion was evaluated, using a crystallized glass sample processed with a length of 20 mm and a diameter of 3.8 mm, from its average coefficients of linear thermal expansion measured in a temperature range of 20 to 200°C, a temperature range of 20 to 380°C, and a temperature range of 20 to 750°C. A dilatometer manufactured by NETZSCH was used for the measurement.

The Young's modulus, the modulus of rigidity, and the Poisson's ratio were measured, using a plate-like sample (40 mm × 20 mm × 2 mm) surface-polished with a polishing solution containing 1200 mesh alumina powder dispersed therein, with a free resonance elastic modulus measurement device (JE-RT3 manufactured by Nihon Techno-Plus Corporation) in a room temperature environment.

The evaluation on breakage was made by considering a crystallized glass having been visually confirmed to have no breakage as "good" and considering a crystallized glass having been visually confirmed to have a breakage as "poor".

The evaluation on color tone was made by considering a crystallized glass having been found to be visually colorless as "good" and considering a crystallized glass having been found not to be visually colorless as "poor".

As is obvious from Tables 1 to 4, each of the crystallized glasses of Samples Nos. 1 to 5 and 7 to 25 included a β-spodumene solid solution precipitated as a major crystalline phase and showed a high transmittance in an ultraviolet to infrared range and a low coefficient of thermal expansion. Furthermore, the crystallized glasses were confirmed to have no breakage and were colorless. The crystallized glass of No. 6, which is a comparative example, showed a yellowish appearance and a low transmittance in an ultraviolet range.

As is obvious from Table 2, the Li₂O-Al₂O₃-SiO₂-based crystallized glass according to the present invention can be crystallized in a short time and provides a high transmittance. Although the crystallization conditions can be changed depending on desired properties, the glass according to the present invention can be crystallized at a process speed equivalent to those of the conventionally used Li₂O-Al₂O₃-SiO₂-based crystallized glasses. Therefore, the Li₂O-Al₂O₃-SiO₂-based crystallized glass according to the present invention can be produced at low cost using existing facilities.

### [Industrial Applicability]

The Li₂O-Al₂O₃-SiO₂-based crystallized glass according to the present invention has a high permeability to light in an ultraviolet to infrared range and a low thermal expansion and is therefore suitable for semiconductor substrates. Furthermore, the Li₂O-Al₂O₃-SiO₂-based crystallized glass according to the present invention is also suitable for front windows of oil stoves, wood stoves and the like, substrates for high-technology products, such as color filter substrates and image sensor substrates, setters for firing electronic components, light diffuser plates, furnace core tubes for producing semiconductors, masks for producing semiconductors, optical lenses, dimension measurement members, communication members, construction members, chemical reaction containers, electromagnetic cooker top plates, heat-resistant plates and utensils, heat-resistant covers, fire door windows, members for astrometric telescopes, and members for space optics.

## Claims

1. A Li₂O-Al₂O₃-SiO₂-based crystallized glass containing, in terms of % by mass, 40 to 90% SiO₂, 1 to 10% Li₂O, 5 to 30% Al₂O₃, 0 to 20% SnO₂, over 0 to 20% ZrO₂, 0 to below 2% TiO₂, 0 to 10% MgO, and 0 to 10% P₂O₅ and including a β-spodumene solid solution precipitated as a main crystalline phase.

2. The Li₂O-Al₂O₃-SiO₂-based crystallized glass according to claim 1, further containing, in terms of % by mass, 0 to 10% Na₂O, 0 to 10% K₂O, 0 to 10% CaO, 0 to 10% SrO, 0 to 10% BaO, 0 to 10% ZnO, and 0 to 10% B₂O₃.

3. The Li₂O-Al₂O₃-SiO₂-based crystallized glass according to claim 1 or 2, containing, in terms of % by mass, 0 to 2% SnO₂.

4. The Li₂O-Al₂O₃-SiO₂-based crystallized glass according to any one of claims 1 to 3, containing, in terms of % by mass, 1.5 to 20% ZrO₂ and over 0 to 10% MgO.

5. The Li₂O-Al₂O₃-SiO₂-based crystallized glass according to any one of claims 1 to 4, further containing, in terms of % by mass, 0.10% or less Fe₂O₃.

6. The Li₂O-Al₂O₃-SiO₂-based crystallized glass according to any one of claims 1 to 5, wherein a mass ratio of MgO/(Li₂O+MgO) is 0.0001 or more.

7. The Li₂O-Al₂O₃-SiO₂-based crystallized glass according to any one of claims 1 to 6, wherein a mass ratio of Al₂O₃/(SnO₂+ZrO₂) is 9 or less.

8. The Li₂O-Al₂O₃-SiO₂-based crystallized glass according to any one of claims 1 to 7, wherein a mass ratio of SnO₂/(SnO₂+ZrO₂+TiO₂+P₂O₅+B₂O₃) is 0.01 or more.

9. The Li₂O-Al₂O₃-SiO₂-based crystallized glass according to any one of claims 1 to 8, wherein a mass ratio of ZrO₂/Li₂O is 0.4 or more.

10. The Li₂O-Al₂O₃-SiO₂-based crystallized glass according to any one of claims 1 to 9, wherein a mass ratio of (SnO₂+ZrO₂+TiO₂)/(SiO₂+Al₂O₃+Li₂O+Na₂O+K₂O+MgO+CaO+SrO+BaO+ZnO+ B₂O₃+P₂O₅) is 0.03 or more.

11. The Li₂O-Al₂O₃-SiO₂-based crystallized glass according to any one of claims 1 to 10, wherein a mass ratio of (SiO₂+Al₂O₃)/Li₂O is 20 or more.

12. The Li₂O-Al₂O₃-SiO₂-based crystallized glass according to any one of claims 1 to 11, wherein a mass ratio of (Li₂O+Na₂O+K₂O)/ZrO₂ is 3.0 or less.

13. The Li₂O-Al₂O₃-SiO₂-based crystallized glass according to any one of claims 1 to 12, wherein a mass ratio of TiO₂/ZrO₂ is 0.0001 to 5.0.

14. The Li₂O-Al₂O₃-SiO₂-based crystallized glass according to any one of claims 1 to 13, wherein a mass ratio of TiO₂/(TiO₂+Fe₂O₃) is 0.001 to 0.999.

15. The Li₂O-Al₂O₃-SiO₂-based crystallized glass according to any one of claims 1 to 14, containing, in terms of % by mass, less than 0.05% HfO₂+Ta₂O₅.

16. The Li₂O-Al₂O₃-SiO₂-based crystallized glass according to any one of claims 1 to 15, containing, in terms of % by mass, 7 ppm or less Pt.

17. The Li₂O-Al₂O₃-SiO₂-based crystallized glass according to any one of claims 1 to 16, containing, in terms of % by mass, 7 ppm or less Rh.

18. The Li₂O-Al₂O₃-SiO₂-based crystallized glass according to any one of claims 1 to 17, containing, in terms of % by mass, 9 ppm or less Pt+Rh.

19. The Li₂O-Al₂O₃-SiO₂-based crystallized glass according to any one of claims 1 to 18, having a coefficient of thermal expansion of -20 × 10⁻⁷/°C to 30 × 10⁻⁷/°C at 20 to 200°C.

20. The Li₂O-Al₂O₃-SiO₂-based crystallized glass according to any one of claims 1 to 19, having a coefficient of thermal expansion of -20 × 10⁻⁷/°C to 30 × 10⁻⁷/°C at 20 to 380°C.

21. The Li₂O-Al₂O₃-SiO₂-based crystallized glass according to any one of claims 1 to 20, having a coefficient of thermal expansion of -20 × 10⁻⁷/°C to 30 × 10⁻⁷/°C at 20 to 750°C.

22. The Li₂O-Al₂O₃-SiO₂-based crystallized glass according to any one of claims 1 to 21, having a colorless appearance.

23. The Li₂O-Al₂O₃-SiO₂-based crystallized glass according to any one of claims 1 to 22, having a transmittance of 1% or more at a thickness of 2 mm and a wavelength of 360 nm.

24. The Li₂O-Al₂O₃-SiO₂-based crystallized glass according to any one of claims 1 to 23, having a transmittance of 10% or more at a thickness of 2 mm and a wavelength of 555 nm.

25. The Li₂O-Al₂O₃-SiO₂-based crystallized glass according to any one of claims 1 to 24, having a transmittance of 35% or more at a thickness of 2 mm and a wavelength of 1070 nm.

26. A Li₂O-Al₂O₃-SiO₂-based crystallized glass having a transmittance of 1% or more at a thickness of 2 mm and a wavelength of 360 nm and a coefficient of thermal expansion of -20 × 10⁻⁷/°C to 30 × 10⁻⁷/°C at 20 to 200°C and including a β-spodumene solid solution precipitated as a major crystalline phase.
